# EUROPEAN PATENT SPECIFICATION

(11) **EP 3 078 582 B1**
(45) Date of publication and mention of the grant of the patent: **24.04.2019**
(21) Application number: 14866709.0
(22) Date of filing: 09.10.2014
(51) Int. Cl.: B62L 3/08, B60T 8/17, B62L 3/00, B60L 11/18, B62K 11/00

(54) **BRAKE DEVICE, AND STRADDLING TYPE VEHICLE**
BREMSVORRICHTUNG UND GRÄTSCHSITZFAHRZEUG
DISPOSITIF DE FREIN ET VÉHICULE DE TYPE À CALIFOURCHON

(30) Priority: 29.11.2013 JP 2013247335
(43) Date of publication of application: 12.10.2016
(73) Proprietor: Yamaha Hatsudoki Kabushiki Kaisha, Iwata-shi, Shizuoka 438-8501 (JP)
(72) Inventor: YASUKAWA, Risa, Iwata-shi Shizuoka 438-8501 (JP); MIZUTANI, Takaaki, Iwata-shi Shizuoka 438-8501 (JP); NISHIMURA, Masaya, Iwata-shi Shizuoka 438-8501 (JP); SAKAI, Kouji, Iwata-shi Shizuoka 438-8501 (JP)
(74) Representative: Zimmermann, Tankred Klaus
(86) International application number: PCT/JP2014/005140
(87) International publication number: WO 2015/079611

(56) References cited:
- JP-A- S59 140 155
- JP-A- 2002 256 904
- JP-A- 2005 239 134
- JP-A- 2009 058 123
- US-A1- 2005 168 060
- US-B1- 6 213 564

## Description

### [Technical Field]

The present invention relates to a brake device and a straddled vehicle including the brake device.

### [Background Art]

In a brake system of a four-wheeled automobile, when a single brake pedal is operated by a driver, an oil pressure generated by a tandem master cylinder is distributed to a pair of wheel cylinders of a front wheel and a pair of wheel cylinders of a rear wheel by mechanic control or electronic control.

On the one hand, for a straddled vehicle such as a motorcycle, operating means of a front wheel brake and operating means of a rear wheel brake are generally independent from each other. Therefore, how brake forces are exerted on the front wheel brake and the rear wheel brake are completely independent from each other.

In Patent Document 1, a front/rear wheel conjunction brake device capable of distributing a braking force to a front wheel and a rear wheel in order to reduce an operation load of the driver in the case where any one operation of operation means of a plurality of systems (a brake lever and a brake pedal) is performed is described.

In the front/rear wheel conjunction brake device described in Patent Document 1, operation pressures by operations of the brake lever and the brake pedal are respectively detected by a pressure sensor. When only the brake lever is operated, front wheel single brake control is performed. When the operation pressure reaches a predetermined value, front/rear wheel conjunction brake control is performed in accordance with ideal braking force distribution characteristics by an ECU (an Electronic Control Unit) and an electronic control actuator. Similarly, when only the brake pedal is operated, rear wheel single brake control is performed. When the operation pressure reaches a predetermined value, the front/rear wheel conjunction brake control is performed in accordance with the ideal braking force distribution characteristics by the ECU and the electronic control actuator.
[Patent Document 1] JP 2000-264278 A

### [Summary of Invention]

### [Technical Problem]

It is considered that a braking force is distributed to a front wheel and a rear wheel by a single operation means also in a straddled vehicle, such as a motorcycle, in order to reduce a load applied in a braking operation of the driver as in the front/rear wheel conjunction brake device of Patent Document 1. However, it is different for a straddled vehicle than for an automobile. With a main switch being turned off (a power OFF state), the driver often moves a vehicle while being seated on a seat and kicking a road surface with his or her feet, or gets off the vehicle and pushes the vehicle while walking. In this case, in the front/rear wheel conjunction brake device of Patent Document 1, the front/rear wheel conjunction brake control by the ECU and the electronic control actuator is not performed. Further, also in the case where an electric problem occurs during travelling, the front/rear conjunction brake control by the ECU and the electronic control actuator is not performed. In a straddled vehicle that is much lighter than an automobile, in the case where single brake control is performed in a condition where the front/rear conjunction brake control should originally be performed, behavior of the vehicle changes, whereby the driver is likely to have an uncomfortable feeling. In Patent Document 1, a technology is not suggested by which the driver can perform a braking operation without having an uncomfortable feeling in such a case.

US 2005/0168060 A1 discloses a brake device according to the preamble of claim 1.

An object of the present invention is to provide a brake device capable of reducing a load applied in a braking operation by a driver and improving comfort during the braking operation, and a straddled vehicle including the brake device.

### [Solution to Problem]

(1) A brake device according to the present invention is provided for a straddled vehicle having a front wheel and a rear wheel, the brake device including a first brake that exerts a braking force on the front wheel by a hydraulic pressure, a second brake that exerts a braking force on the rear wheel by a hydraulic pressure, a single operation member operated by a driver in order to adjust the braking forces of the first and second brakes, an operation amount detector that detects an operation amount of the operation member, a storage that stores a relationship between an operation amount of the operation member and braking forces to be respectively exerted on the front wheel and the rear wheel, a hydraulic pressure control device that performs hydraulic pressure control to acquire a braking force to be exerted on the front wheel as a first target braking force, and acquire a braking force to be exerted on the rear wheel as a second target braking force, and from the relationship stored in the storage based on the operation amount detected by the operation amount detector, supply a hydraulic pressure corresponding to the acquired first target braking force to the first brake, and supply a hydraulic pressure corresponding to the acquired second target braking force to the second brake, and a hydraulic pressure generation device that respectively supplies hydraulic pressures corresponding to the operation amount of the operation member to the first brake and the second brake during a non-operation of the hydraulic pressure control of the hydraulic pressure control device, wherein the hydraulic pressure control device performs the hydraulic pressure control such that a relationship between an operation amount of the operation member and a total of braking forces exerted on the front wheel and the rear wheel during an operation of the hydraulic pressure control is equal to a relationship between an operation amount of the operation member and a total of braking forces exerted on the front wheel and the rear wheel during the non-operation of the hydraulic pressure control.

In the brake device, during the operation of the hydraulic pressure control of the hydraulic pressure control device, the operation amount of the operation member by the driver is detected by the operation amount detector. The first and second target braking forces are acquired from the relationship stored in the storage based on the operation amount detected by the operation amount detector. The hydraulic pressure corresponding to the acquired first target braking force is supplied to the first brake, and the hydraulic pressure corresponding to the acquired second target braking force is supplied to the second brake. Thus, an appropriate braking force corresponding to the operation amount can be respectively distributed to the front wheel and the rear wheel by operation of the single operation member by the driver.

During the power OFF or when a problem occurs, the hydraulic pressure control device does not operate, and the hydraulic pressure control is not performed. During the non-operation of the hydraulic pressure control device, the hydraulic pressures corresponding to the operation amount of the operation member by the driver are supplied to the first and second brakes by the hydraulic pressure generation device. Thus, the driver can manually adjust the braking forces exerted on the front wheel and the rear wheel by operating the single operation member.

Here, the relationship between the operation amount of the operation member and the total of the braking forces exerted on the front wheel and the rear wheel during the operation of the hydraulic pressure control is equal to the relationship between the operation amount of the operation member and the total of the braking forces exerted on the front wheel and the rear wheel during the non-operation of the hydraulic pressure control. Thus, when the operation state of the hydraulic pressure control and the non-operation state of the hydraulic pressure control are switched with each other, a rapid change in braking force does not occur. Therefore, stable deceleration is performed without an uncomfortable feeling being supplied to the driver. As a result, a load applied in the braking operation by the driver can be reduced, and the comfort during the braking operation can be improved.
(2) The first brake may include a first cylinder that exerts a braking force on the front wheel by a hydraulic pressure, the second brake may include a second cylinder that exerts a braking force on the rear wheel by a hydraulic pressure, the hydraulic pressure generation device may include a tandem master cylinder having first and second pressure chambers that respectively generate the hydraulic pressures corresponding to the operation amount of the operation member, and the hydraulic pressure generated by the first pressure chamber may be supplied to the first cylinder, and the hydraulic pressure generated by the second pressure chamber may be supplied to the second cylinder.
   In this case, the braking forces are respectively exerted on the front wheel and the rear wheel by independent hydraulic pressure systems.
(3) The storage may store the plurality of relationships, the brake device may further comprise a selector that selects one relationship from the plurality of relationships, and the hydraulic pressure control device may respectively acquire the first and second target braking forces from the relationship selected by the selector based on the operation amount detected by the operation amount detector.
   In this case, the driver can select a desired braking method. Thus, distribution of the braking forces to the front wheel and the rear wheel can be changed according to each type of condition, such as a state of a loaded object or a driving method. As a result, braking to the satisfaction of the driver is possible.
(4) The straddled vehicle may comprise a motor, a handlebar, and an accelerator grip that is provided at one end of the handlebar and adjusts an output of the motor, and may have a configuration for transmitting the output of the motor to at least one of the front wheel and the rear wheel via an automatic transmission or directly, and the single operation member may include a brake lever provided at a portion of the handlebar on an opposite side of the accelerator grip.
   In this case, the brake lever, which is a single operation member, is provided on the opposite side of the accelerator grip. Thus, the driver can simultaneously and independently perform the adjustment of the braking forces and the adjustment of the driving forces for the front wheel and the rear wheel. Therefore, good driving operability during the acceleration and deceleration of the straddled vehicle can be ensured, and the behavior and the speed of the straddled vehicle can be easily adjusted.
(5) The straddled vehicle may comprise a motor, a handlebar, an accelerator grip that is provided at one end of the handlebar and adjusts an output of the motor, and a clutch lever provided at a portion of the handlebar on an opposite side of the accelerator grip, and the single operation member may include a brake lever provided on a same side as the accelerator grip of the handlebar.
   In this case, the brake lever, which is a single operation member, is provided on the opposite side of the clutch lever. Thus, during starting on the ramp, the driver can simultaneously and independently perform the adjustment of the braking forces and the adjustment of the disconnection and connection of the driving forces for the front wheel and the rear wheel with different hands. Therefore, good driving operability during the stop or before and after the starting of the straddled vehicle can be ensured.
(6) The straddled vehicle may comprise a motor, a handlebar, an accelerator grip that is provided at one end of the handlebar and adjusts an output of the motor, first and second footrests on which feet of a driver are put, and a shift pedal provided to be operable by a foot put on the first footrest, and the single operation member may include a brake pedal provided to be operable by a foot put on the second footrest.
   In this case, the brake pedal that is a single operation member is provided to be operable by a foot put on the second footrest, and the accelerator grip is provided at one end of the handlebar. Thus, the driver can perform the braking operation with his or her foot, and perform an accelerator operation with his or her hand. Thus, a driving operation becomes easier.
(7) The straddled vehicle may comprise a motor, a handlebar, and a thumb lever type accelerator lever that is provided at one end of the handlebar and adjusts an output of the motor, and the single operation member may include a brake lever provided at a portion of the handlebar on an opposite side of the accelerator lever.
   In this case, the brake lever, which is a single operation member, is provided on the opposite side of the thumb lever type accelerator grip. Thus, the driver can simultaneously and independently perform the adjustment of the braking forces and the adjustment of the driving forces for the front wheel and rear wheel. Therefore, good driving operability during the acceleration and deceleration of the straddled vehicle can be ensured, and the behavior and speed of the straddled vehicle can be easily adjusted. Further, one end of the handlebar can be easily held by a thumb and a plurality of other fingers, whereby steerability and maintenance of the upper body can be enhanced.
(8) A straddled vehicle according to the present invention includes a body, a front wheel provided at the body to be rotatable, a rear wheel provided at the body to be rotatable, a motor that generates an output for rotating at least one of the front wheel and the rear wheel, and the above-mentioned brake device for braking the front wheel and the rear wheel.
   In the straddled vehicle, when the operation state of the hydraulic pressure control and the non-operation state of the hydraulic pressure control are switched with each other, a rapid change in braking force does not occur. Therefore, stable deceleration is performed without an uncomfortable feeling being supplied to the driver. As a result, a load applied in the braking operation by the driver can be reduced, and the comfort during the braking operation can be improved.

### [Advantageous Effects of Invention]

The present invention enables a reduction in a load applied in the braking operation by the driver and improvement of the comfort during the braking operation.

### [Brief Description of Drawings]

Fig. 1 is a schematic side view showing a schematic configuration of a motorcycle according to the present embodiment.
Fig. 2 is a plan view showing a handle.
Fig. 3 is a schematic diagram showing the configuration of a brake device.
Fig. 4 is a schematic diagram mainly showing the configuration of an oil pressure unit of the brake device of Fig. 3.
Fig. 5 is a schematic diagram showing an operation of the brake device during the control OFF.
Fig. 6 is a schematic diagram showing a pressurizing operation of the brake device during the control ON.
Fig. 7 is a schematic diagram showing a depressurizing operation of the brake device during the control ON.
Fig. 8 is a schematic diagram showing a retaining operation of the brake device during the control ON.
Fig. 9 is a schematic diagram showing the pressurizing operation and the depressurizing operation of the brake device during the control ON.
Fig. 10 is a schematic diagram showing the depressurizing operation and pressurizing operation of the brake device during the control ON.
Fig. 11 is a diagram showing a first example of operation amount-front/rear wheel target braking force characteristics.
Fig. 12 is a diagram showing a second example of the operation amount-front/rear wheel target braking force characteristics.
Fig. 13 is a diagram showing an example of operation amount-both wheels target braking force characteristics in an embodiment.
Fig. 14 is a diagram for explaining a change in a braking force when a control ON state and a control OFF state are switched with each other in the embodiment.
Fig. 15 is a diagram showing an example of operation amount-both wheels target braking force characteristics in a comparative example.
Fig. 16 is a diagram for explaining a change in a braking force when the control ON state and the control OFF state are switched with each other in the comparative example.
Fig. 17 is a block diagram mainly showing the configuration of a control system of the brake device of Fig. 3.
Fig. 18 is a flow chart showing an operation of the brake device of Fig. 17 during the control ON.
Fig. 19 is a plan view showing another example of the handle.
Fig. 20 is a schematic plan view showing an example of another motorcycle to which the present invention is applied.
Fig. 21 is a schematic side view of the motorcycle of Fig. 20.
Fig. 22 is a plan view showing yet another example of the handle.
Fig. 23 is a schematic diagram mainly showing an example of another configuration of the oil pressure unit of the brake device.

### [Description of Embodiments]

A straddled vehicle according to embodiments of the present invention will be described below with reference to the drawings. The straddled vehicle of the present embodiment is a motorcycle.

### (1) Schematic Configuration of Motorcycle

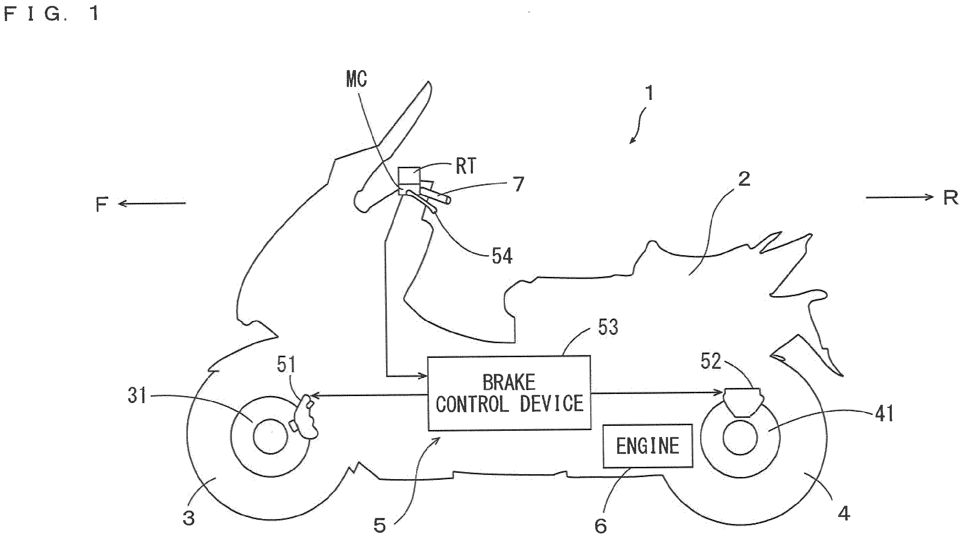

Fig. 1 is a schematic side view showing the schematic configuration of the motorcycle according to the present embodiment. In the following description, forward, rearward, leftward, and rightward as viewed from a driver who is seated on a seat of the motorcycle 1 are referred to as forward, rearward, leftward and rightward, respectively. An arrow F in the diagram indicates forward, and an arrow R indicates rearward.

The motorcycle 1 of Fig. 1 is a scooter-type vehicle, and includes a vehicle main body 2, a front wheel 3, a rear wheel 4, a brake device 5, an engine 6 and a handle 7. The vehicle main body 2 is constituted by a vehicle body frame, a vehicle body cover, a head light, a seat and the like.

A front fork (not shown) is provided at a front portion of the vehicle main body 2 to be swingable to the left and right, and the front wheel 3 is provided at a lower end of the front fork to be rotatable. A pair of annular disc rotors 31 is provided on both sides of the front wheel 3. The rear wheel 4 is provided at a swing arm (not shown) at a rear portion of the vehicle main body 2 to be rotatable. The engine 6 is provided at the vehicle main body 2 in front of the rear wheel 4. The rear wheel 4 is rotated by a torque of the engine 6. An annular disc rotor 41 is provided on the side of the rear wheel 4.

The brake device 5 includes a front wheel brake 51, a rear wheel brake 52, a brake control device 53, a brake lever 54, which is a single operation member, and the like. The front wheel brake 51 is attached to the front fork. The rear wheel brake 52 is attached to the swing arm. The brake control device 53 is provided at the vehicle main body 2. Details of the brake device 5 will be described below. The handle 7 is attached to an upper end of the front fork.

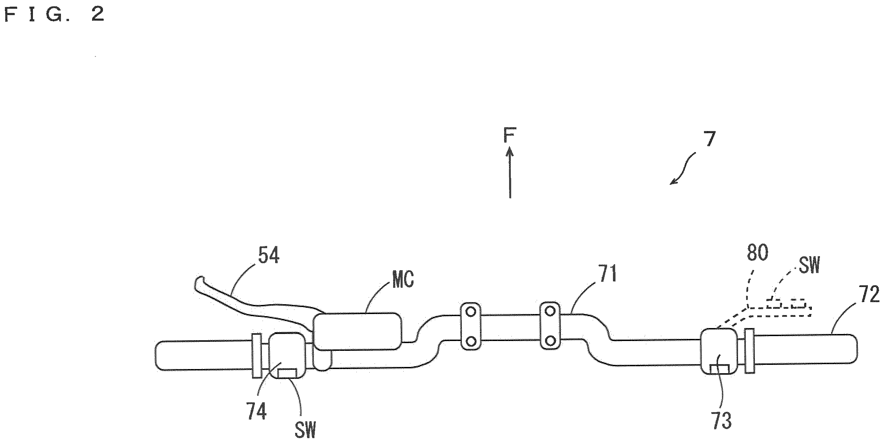

Fig. 2 is a plan view showing the handle 7. As shown in Fig. 2, the handle 7 includes a handlebar 71. An accelerator grip 72 is provided at the right end of the handlebar 71. A tandem master cylinder MC is provided at the center of the left half portion of the handlebar 71. Further, the brake lever 54 is provided at the center of the left half portion of the handlebar 71 to extend to a position in the vicinity of the left end. A reserve tank RT (not shown) of Fig. 1 is attached to an upper surface of the tandem master cylinder MC.

A switch box 73 is attached to the right half portion of the handlebar 71 to be adjacent to an inner end of the accelerator grip 72. Further, a switch box 74 is attached to the left half portion of the handlebar 71 to be adjacent to an outer end of the tandem master cylinder MC. A characteristics switching switch SW is provided at the switch box 74. The characteristics switching switch SW may be provided at the switch box 73.

Further, as indicated by dotted lines in Fig. 2, a support member 80 may be provided to extend from the switch box 73 in the right half portion of the handlebar 71 to a position in the vicinity of the right end, and the characteristics switching switch SW may be provided at the support member 80.

In the motorcycle 1 of the present embodiment, a driver adjusts the output of the engine 6 by operating the accelerator grip 72 with his or her right hand. Further, the driver performs deceleration of the motorcycle 1 by operating the brake lever 54 with his or her left hand. The transmission of power from the engine 6 to the rear wheel 4 is performed via an automatic transmission. Disconnection and connection of a power transmission path are automatically performed by a power disconnection/connection mechanism such as a centrifugal clutch or the like. Therefore, a clutch lever is not provided at the handlebar 71. Further, in the case where an electric motor is employed as a motor instead of the engine 6, the automatic transmission and the power disconnection/connection mechanism are not provided, and the output of the electric motor is directly transmitted to the rear wheel 4. Also in this case, the clutch lever is not provided at the handlebar 71.

In the present embodiment, the brake lever 54 that is a single operation member is provided on the opposite side of the accelerator grip 72, so that the driver can perform adjustment of the braking forces and adjustment of the driving forces for the front wheel 3 and the rear wheel 4 simultaneously and independently. Therefore, good driving operability during acceleration and deceleration of the motorcycle 1 can be ensured, and behavior and a speed of the motorcycle 1 can be easily adjusted.

### (2) Configuration of Brake Device 5

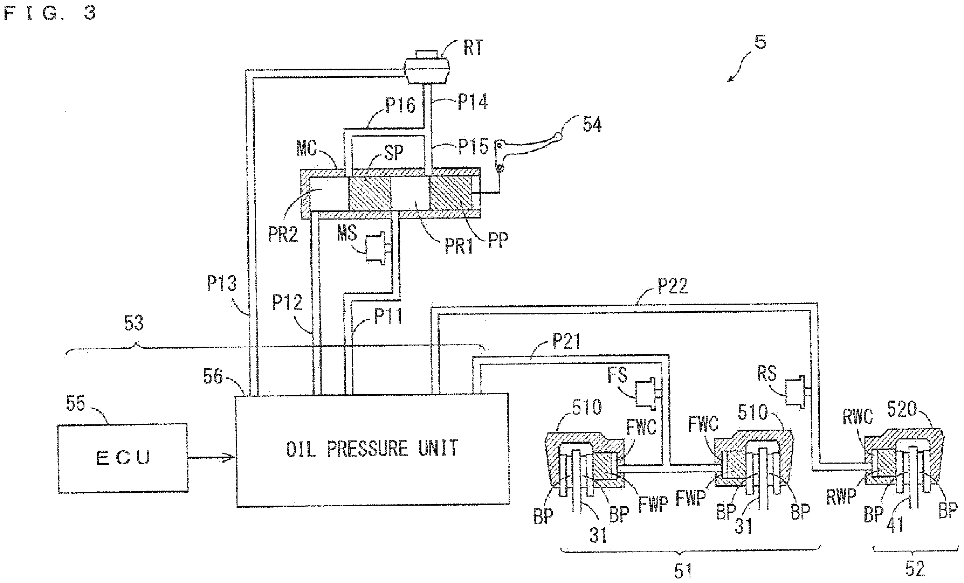

Fig. 3 is a schematic diagram showing the configuration of the brake device 5. As shown in Fig. 3, the brake device 5 includes the front wheel brake 51, the rear wheel brake 52, the brake control device 53, the brake lever 54, the reserve tank RT, the tandem master cylinder MC, a master pressure sensor MS, a front caliper pressure sensor FS and a rear caliper pressure sensor RS. The brake control device 53 is constituted by an ECU (an Electronic Control Unit) 55 and an oil pressure unit 56.

In the tandem master cylinder MC, a primary piston PP and a secondary piston SP are provided to be movable in an axis direction. Thus, a first pressure chamber PR1 and a second pressure chamber PR2 are formed in the tandem master cylinder MC. The primary piston PP and the secondary piston SP are moved in the axis direction by an operation of the brake lever 54. Thus, equal pressures are generated in the first pressure chamber PR1 and the second pressure chamber PR2.

The first pressure chamber PR1 is connected to the oil pressure unit 56 via an oil pressure pipe P11. The master pressure sensor MS is attached to the oil pressure pipe P11. The master pressure sensor MS detects the pressure in the oil pressure pipe P11. The second pressure chamber PR2 is connected to the oil pressure unit 56 via an oil pressure pipe P12. The reserve tank RT is connected to the oil pressure unit 56 via an oil pressure pipe P13. Further, the reserve tank RT is connected to the first pressure chamber PR1 of the tandem master cylinder MC via oil pressure pipes P14, P15, and is connected to the second pressure chamber PR2 of the tandem master cylinder MC via the oil pressure pipes P14, P16.

The front wheel brake 51 includes a pair of front calipers 510. Each front caliper 510 includes a front wheel cylinder FWC and a front wheel piston FWP. Further, each front caliper 510 includes a pair of brake pads BP that press the disc rotor 31.

The rear wheel brake 52 includes a rear caliper 520. The rear caliper 520 includes a rear wheel cylinder RWC and a rear wheel piston RWP. Further, the rear caliper 520 includes a pair of brake pads BP that press the disc rotor 41.

The front wheel cylinders FWC are connected to the oil pressure unit 56 via an oil pressure pipe P21. A front caliper pressure sensor FS is attached to the oil pressure pipe P21. The rear wheel cylinder RWC is connected to the oil pressure unit 56 via an oil pressure pipe P22. A rear caliper pressure sensor RS is attached to the oil pressure pipe P22. The front caliper pressure sensor FS detects the pressure in the oil pressure pipe P21, and the rear caliper pressure sensor RS detects the pressure in the oil pressure pipe P22.

An operation amount of the brake lever 54 corresponds to the pressure detected by the master pressure sensor MS. The braking force exerted on the front wheel 3 corresponds to the pressure detected by the front caliper pressure sensor FS. Further, the braking force exerted on the rear wheel 4 corresponds to the pressure detected by the rear caliper pressure sensor RS.

The ECU 55 acquires the operation amount of the brake lever 54 based on the pressure detected by the master pressure sensor MS. Further, the ECU 55 detects the braking forces exerted on the front wheel 3 and the rear wheel 4 based on the pressures detected by the front caliper pressure sensor FS and the rear caliper pressure sensor RS.

In the case where electric power is supplied to the brake control device 53, the brake control device 53 performs hydraulic pressure control. In the hydraulic pressure control, target braking forces to be respectively exerted on the front wheel 3 and the rear wheel 4 are acquired from operation amount-front/rear wheel target braking force characteristics, described below, based on the operation amount of the brake lever 54, and the oil pressures corresponding to the acquired target braking forces are respectively supplied to the front wheel brake 51 and the rear wheel brake 52. In this case, the braking forces are respectively exerted on the front wheel 3 and the rear wheel 4 by independent oil pressure systems.

On the one hand, in the case where a main switch is turned off, electric power is not supplied to the brake control device 53. Further, when a problem with an electric system such as the master pressure sensor MS occurs, power supply to the oil pressure unit 56 is turned off. Thus, the brake control device 53 does not perform the hydraulic pressure control. In this case, the oil pressure corresponding to the operation amount of the brake lever 54 is supplied to the front wheel brake 51 and the rear wheel brake 52 from the tandem master cylinder MC.

Hereinafter, a state in which the hydraulic pressure control of the brake control device 53 is operating is referred to as a control ON state, and a state in which the hydraulic pressure control of the brake control device 53 is not operating is referred to as a control OFF state.

When the main switch is turned off in the control ON state of the brake control device 53 or when a problem with the electric system such as the master pressure sensor MS is detected, the brake control device 53 is shifted to the control OFF state.

### (3) Configuration of Oil Pressure Unit 56

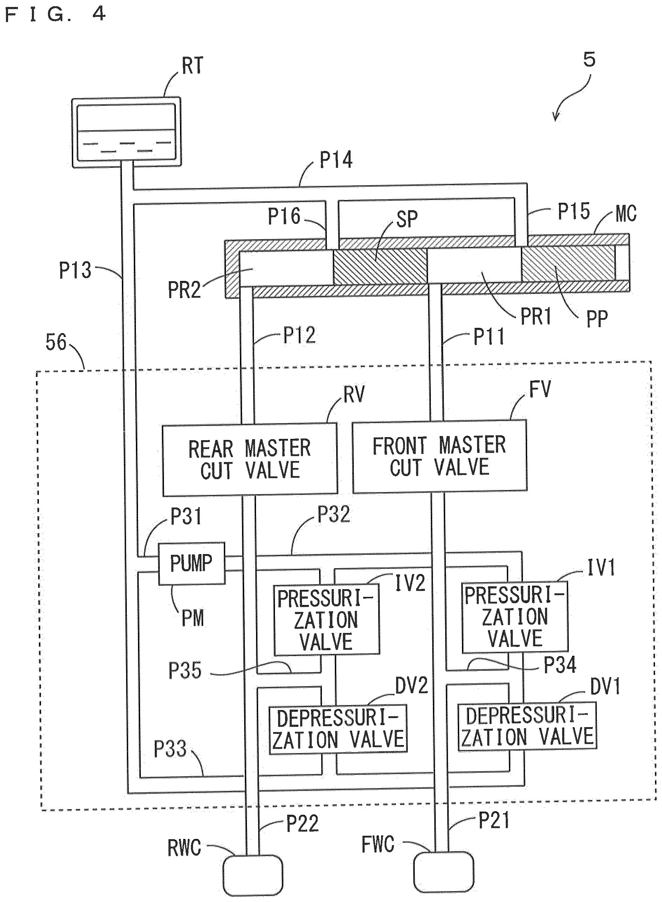

Fig. 4 is a schematic diagram mainly showing the configuration of the oil pressure unit 56 of the brake device 5 of Fig. 3. The oil pressure unit 56 includes a pump PM, a front master cut valve FV, a rear master cut valve RV, pressurization valves IV1, IV2 and depressurization valves DV1, DV2.

An oil pressure pipe P31 and an oil pressure pipe P33 are connected to the oil pressure pipe P13. The pump PM is inserted between the oil pressure pipe P31 and an oil pressure pipe P32. The front master cut FV is inserted between the oil pressure pipe P11 and the oil pressure pipe P21. The rear master cut valve RV is inserted between the oil pressure pipe P12 and the oil pressure pipe P22.

An oil pressure pipe P34 is provided to branch from the oil pressure pipe P21, and an oil pressure pipe P35 is provided to branch from the oil pressure pipe P22. The pressurization valve IV1 is inserted between the oil pressure pipe P32 and the oil pressure pipe P34, and the pressurization valve IV2 is inserted between the oil pressure pipe P32 and the oil pressure pipe P35. The depressurization valve DV1 is inserted between the oil pressure pipe P33 and the oil pressure pipe P34, and the depressurization valve DV2 is inserted between the oil pressure pipe P33 and the oil pressure pipe P35.

### (4) Operation of Brake Device 5

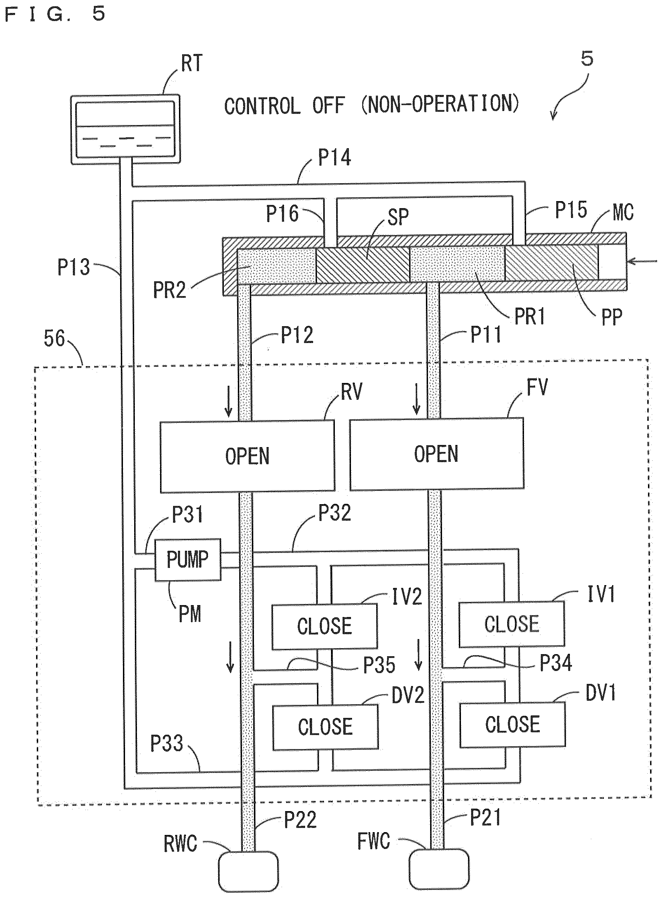

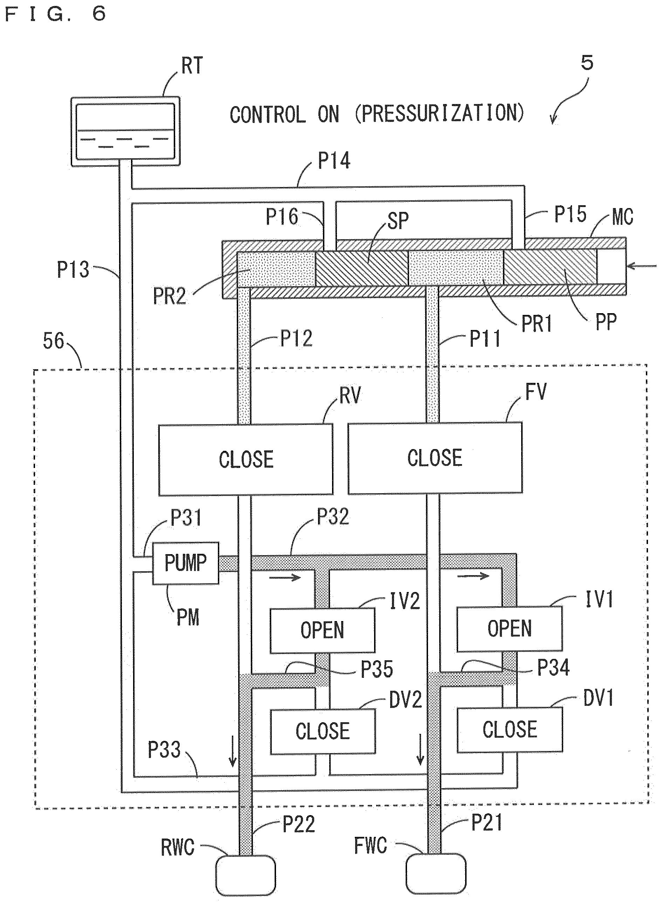

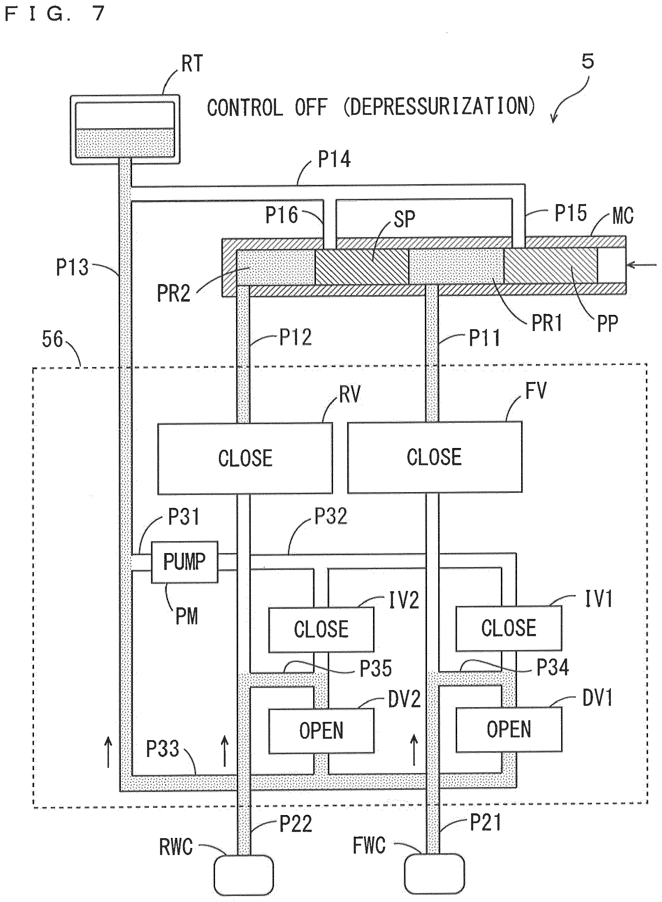

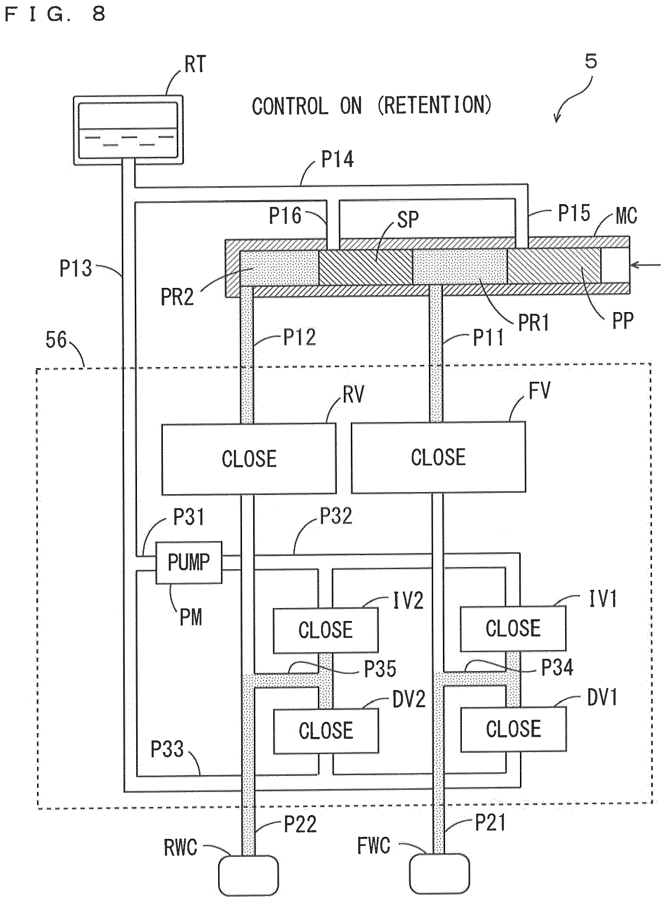

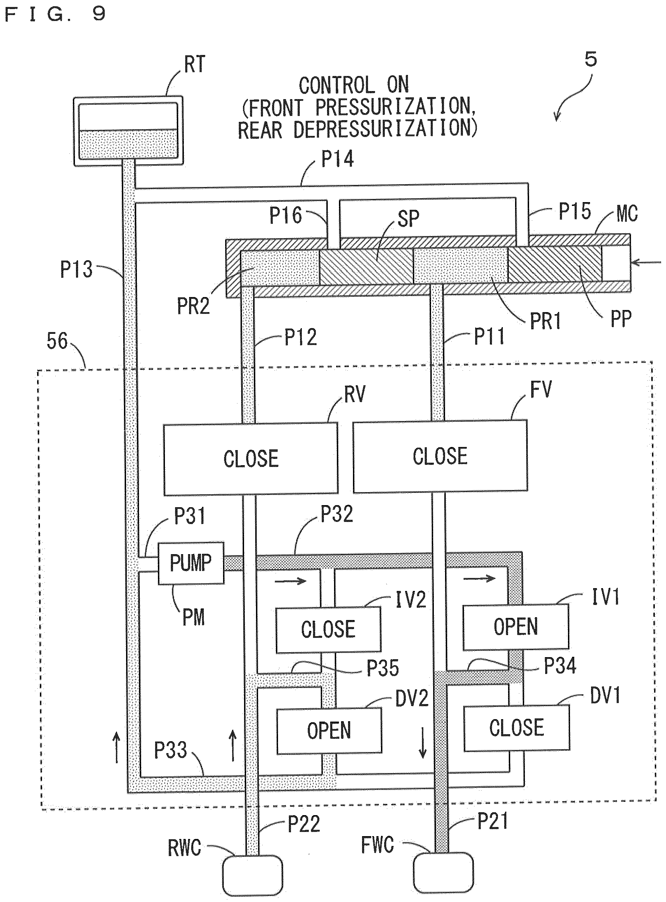

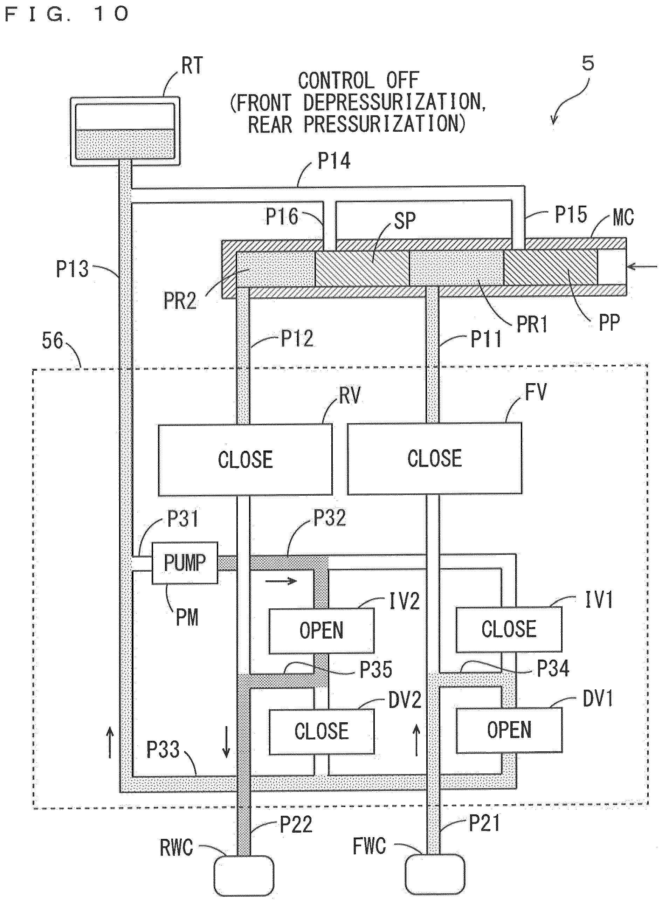

Fig. 5 is a schematic diagram showing an operation of the brake device 5 during the control OFF. Fig. 6 is a schematic diagram showing a pressurizing operation of the brake device 5 during the control ON, Fig. 7 is a schematic diagram showing a depressurizing operation of the brake device 5 during the control ON, and Fig. 8 is a schematic diagram showing a retaining operation of the brake device 5 during the control ON. Fig. 9 is a schematic diagram showing the pressurizing operation and the depressurizing operation of the brake device 5 during the control ON, and Fig. 10 is a schematic diagram showing the pressurizing operation and the depressurizing operation of the brake device 5 during the control ON. In Figs. 5 to 10, the inside of the oil pressure pipes P11 to P16, P21, P22, P31 to P35 is filled with a brake oil.

As shown in Fig. 5, during the control OFF, the front master cut valve FV and the rear master cut valve RV of the oil pressure unit 56 are opened, and the pressurization valves IV1, IV2 and the depressurization valves DV1, DV2 are closed. Further, the pump PM does not operate. In this case, when the driver operates the brake lever 54, the primary piston PP and the secondary piston SP in the tandem master cylinder MC are moved in the axis direction as indicated by an arrow. Thus, openings at the ends of the oil pressure pipes P15, P16 are closed, and the brake oils in the first pressure chamber PR1 and the second pressure chamber PR2 are pressurized. As a result, the oil pressure pressurized in the first pressure chamber PR1 of the tandem master cylinder MC is directly supplied to the front wheel cylinder FWC via the oil pressure pipe P11, the front master cut valve FV and the oil pressure pipe P21. Further, the oil pressure pressurized in the second pressure chamber PR2 of the tandem master cylinder MC is directly supplied to the rear wheel cylinder RWC via the oil pressure pipe P12, the rear master cut valve RV and the oil pressure pipe P22. Thus, the braking forces corresponding to the operation amount of the brake lever 54 are respectively exerted on the front wheel 3 and the rear wheel 4.

As shown in Figs. 6 to 10, during the control ON, the front master cut valve FV and the rear master cut valve RV are closed.

As shown in Fig. 6, during the pressurizing operation in the control ON state, the pressurization valves IV1, IV2 are opened, and the depressurization valves DV1, DV2 are closed. The pump PM operates. In this case, the oil pressure pressurized by the pump PM is respectively supplied to the front wheel cylinder FWC and the rear wheel cylinder RWC via the oil pressure pipe P31, the oil pressure pipe P32, the pressurization valves IV1, IV2, the oil pressure pipes P34, P35 and the oil pressure pipes P21, P22.

As shown in Fig. 7, during the depressurizing operation in the control ON state, the pressurization valves IV1, IV2 are closed, and the depressurization valves DV1, DV2 are opened. The pump PM does not operate. In this case, the oil pressure in the front wheel cylinder FWC and the oil pressure in the rear wheel cylinder in RWC are decreased via the oil pressure pipes P21, P22, the oil pressure pipes P34, P35, the depressurization valves DV1, DV2, the oil pressure pipe P33, and the oil pressure pipe P13.

As shown in Fig. 8, during the retaining operation in the control ON state, the pressurization valves IV1, IV2 and the depressurization valves DV1, DV2 are closed. The pump PM does not operate. In this case, the oil pressure in the front wheel cylinder FWC and the oil pressure in the rear wheel cylinder RWC are retained.

As shown in Fig. 9, during a front pressurizing operation and a rear depressurizing operation in the control ON state, the pressurization valve IV1 and the depressurization valve DV2 are opened, and the pressurization valve IV2 and the depressurization valve DV1 are closed. The pump PM operates. In this case, the oil pressure pressurized by the pump PM is supplied to the front wheel cylinder FWC via the oil pressure pipe P32, the pressurization valve IV1, the oil pressure pipe P34, and the oil pressure pipe P21. On the one hand, the oil pressure in the rear wheel cylinder RWC is reduced via the oil pressure pipe P22, the oil pressure pipe P35, the depressurization valve DV2, the oil pressure pipe P33, and the oil pressure pipe P13. Thus, the oil pressure in the front wheel cylinder FWC is increased, and the oil pressure in the rear wheel cylinder RWC is decreased.

As shown in Fig. 10, during a front depressurizing operation and a rear pressurizing operation in the control ON state, the pressurization valve IV2 and the depressurization valve DV1 are opened, and the pressurization valve IV1 and the depressurization valve DV2 are closed. The pump PM operates. In this case, the oil pressure in the front wheel cylinder FWC is decreased via the oil pressure pipe P21, the oil pressure pipe P34, the depressurization valve DV1, the oil pressure pipe P33 and the oil pressure pipe P13. On the one hand, the brake oil pressurized by the pump PM is supplied to the rear wheel cylinder RWC via the oil pressure pipe P32, the pressurization valve IV2, the oil pressure pipe P35 and the oil pressure pipe P22. Thus, the oil pressure in the front wheel cylinder FWC is decreased, and the oil pressure in the rear wheel cylinder RWC is increased.

In this manner, in the control ON state, opening and closing of the pressurization valves IV1, IV2 and the depressurization valves DV1, DV2 are respectively controlled, whereby the oil pressures supplied to the front wheel cylinder FWC and the rear wheel cylinder RWC can be respectively and independently controlled.

### (5) Operation Amount-Front/Rear Wheel Target Braking Force Characteristics

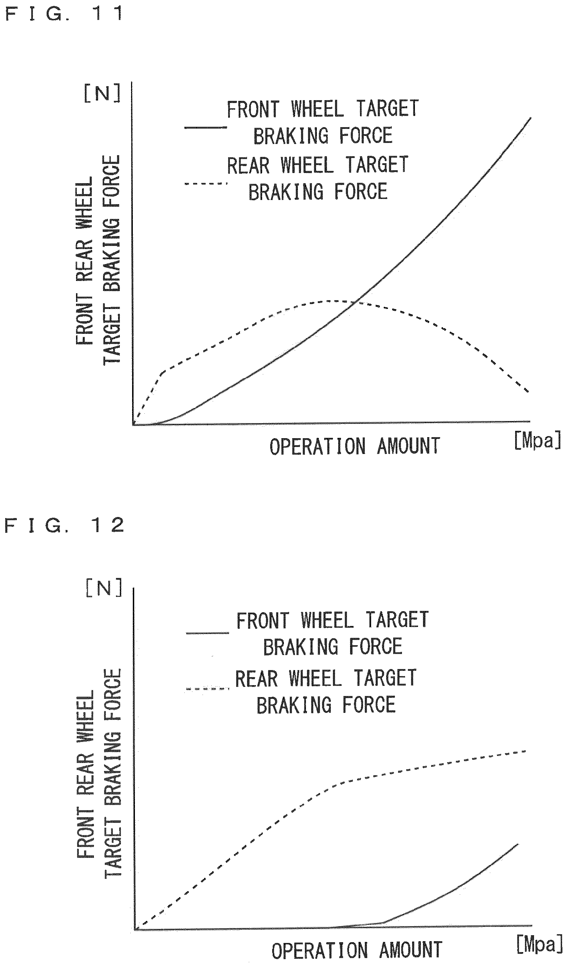

Fig. 11 is a diagram showing a first example of the operation amount-front/rear wheel target braking force characteristics. Fig. 12 is a diagram showing a second example of the operation amount-front/rear wheel target braking force characteristics.

The operation amount-front/rear wheel target braking force characteristics shows a relationship between the operation amount of the brake lever 54 by the driver and the braking force to be exerted on the front wheel 3, and a relationship between the operation amount of the brake lever 54 by the driver and the braking force to be exerted on the rear wheel 4. The braking force to be exerted on the front wheel 3 is referred to as a front wheel target braking force, and the braking force to be exerted on the rear wheel 4 is referred to as a rear wheel target braking force.

The abscissas of Figs. 11 and 12 indicate the operation amount [MPa] of the brake lever 54, and the ordinates indicate the front wheel target braking force [N] and the rear wheel target braking force [N].

In the operation amount-front/rear wheel target braking force characteristics of Fig. 11, in the case where the operation amount is small, the braking force is distributed to the front wheel 3 and the rear wheel 4 such that the rear wheel target braking force is larger than the front wheel target braking force. In the case where the operation amount is large, the braking force is distributed to the front wheel 3 and the rear wheel 4 such that the front wheel target braking force is larger than the rear wheel target braking force.

The operation amount-front/rear wheel target braking force characteristics of Fig. 11 is equivalent to a general ideal braking force distribution line. The ideal braking force distribution line is a distribution method by which the front wheel 3 and the rear wheel 4 are simultaneously locked in a condition of the road surface in which a braking force that can be generated during the traveling of the motorcycle 1 in a straight line is at a maximum. The braking force is distributed to the front wheel 3 and the rear wheel 4 based on the ideal braking force distribution line, whereby deceleration of the motorcycle 1 can be sufficiently ensured.

In the operation amount-front/rear wheel target braking force characteristics of Fig. 12, the braking force is distributed to the front wheel 3 and the rear wheel 4 such that the rear wheel target braking force is larger than the front wheel target braking force. The operation amount-front/rear wheel target braking force characteristics of Fig. 12 represents braking force distribution characteristics having importance on the rear wheel. The operation amount-front/rear wheel target braking force characteristics having importance on the front wheel may be used.

Braking of the straddled vehicle, such as a motorcycle, is more likely to be influenced by a condition of a loaded object than a four-wheeled automobile. In the case where there is a small amount of a loaded object and the center of gravity is in a front portion, the operation amount-front/rear wheel target braking force characteristics having importance on the front wheel is used, whereby distribution of the braking force is optimal. In the case where there is a large amount of a loaded object and the center of gravity is in a rear portion, the operation amount-front/rear wheel target braking force characteristics having an importance on the rear wheel is used, whereby distribution of the braking force is optimal. Further, in the case where the driver wishes to perform rapid deceleration or raise the body position of the vehicle, the operation amount-front/rear wheel target braking force characteristics having importance on the front wheel can be used. In the case where the driver wishes to make a U-turn or travel at an extremely low speed, the operation amount-front/rear wheel target braking force having importance on the rear wheel can be used.

The driver can select any one of a plurality of operation amount-front/rear wheel target braking force characteristics using the characteristics switching switch SW of Fig. 2. Thus, distribution of the braking force to the front wheel 3 and the rear wheel 4 can be changed according to each type of a condition such as a state of a loaded object or a driving method. As a result, braking to the satisfaction of the driver is possible.

### (6) Operation Amount-Both Wheels Target Braking Force Characteristics

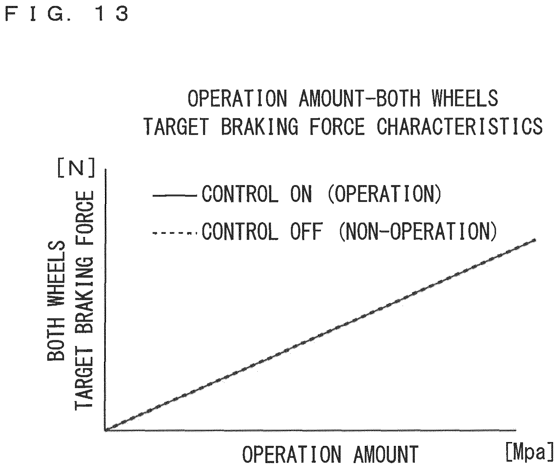

Fig. 13 is a diagram showing an example of the operation amount-both wheels target braking force characteristics in the present embodiment. The operation amount-both wheels target braking force characteristics shows a relationship between the operation amount of the brake lever 54 by the driver and the total of the braking forces to be exerted on the front wheel 3 and the rear wheel 4. The total of the braking forces to be exerted on the front wheel 3 and the rear wheel 4 is referred to as a both wheels target braking force.

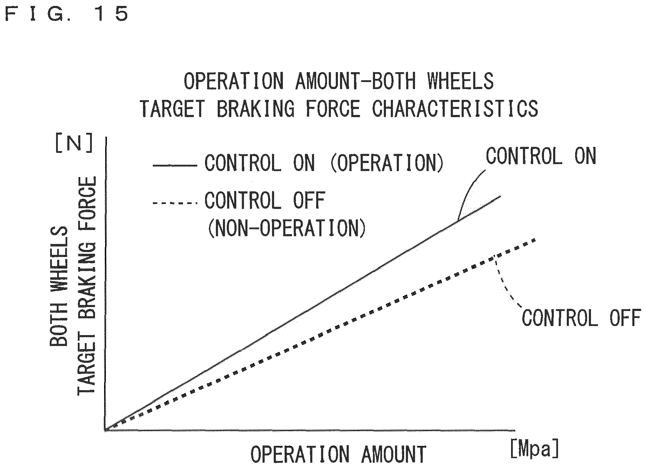

The abscissa of Fig. 13 indicates the operation amount [MPa] of the brake lever 54, and the ordinate indicates the both wheels target braking force [N]. This also applies to Fig. 15, described below.

In the present embodiment, the operation amount-front/rear wheel target braking force characteristics of Figs. 11 and 12 is set such that the operation amount-both wheels target braking force characteristics in the case where the brake control device 53 is in the control ON state is equal to the operation amount-both wheels target braking force characteristics in the case where the brake control device 53 is in the control OFF state. Thus, in any operation amount, the total of the braking forces respectively exerted on the front wheel 3 and the rear wheel 4 in the control ON state is equal to the total of the braking forces exerted on the front wheel 3 and the rear wheel 4 in the control OFF state.

Here, the total of the braking forces exerted on the front wheel 3 and the rear wheel 4 in the control OFF state (the both wheels braking force) can be found from the following arithmetic formula.

The both wheels braking force = a master cylinder pressure x {(a front wheel cylinder area x a friction coefficient of a front wheel brake pad x the number of front wheel disc rotors x an effective radius of the front wheel disc rotor / an effective radius of a front wheel tire) + (a rear wheel cylinder area x a friction coefficient of a rear wheel brake pad x the number of rear wheel disc rotors x an effective radius of the rear wheel disc rotor / an effective radius of a rear wheel tire)}

Here, the master cylinder pressure is the pressure detected by the master pressure sensor MS. From the above formula, the both wheels braking force corresponding to the master cylinder pressure is calculated. Therefore, a relationship between the operation amount of the brake lever 54 and the both wheels target braking force (the operation amount-the both wheels target braking force characteristics) can be found in advance.

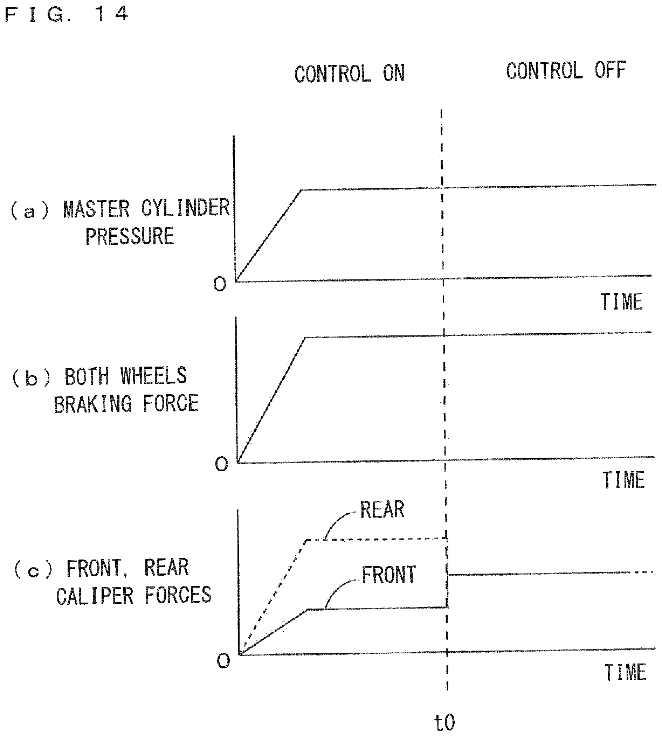

Fig. 14 is a diagram for explaining changes in braking force when the control ON state and the control OFF state are switched with each other in the embodiment.

Fig. 14(a) shows a change in master cylinder pressure, Fig. 14(b) shows a change in total of the braking forces exerted on the front wheel 3 and the rear wheel 4 (the both wheels braking force), and Fig. 14(c) shows changes in front caliper pressure and rear caliper pressure. The abscissas of the Figs. 14(a) to 14(c) indicate time. The master cylinder pressure corresponds to the operation amount of the brake lever 54. Here, the front caliper pressure is the pressure detected by the front caliper pressure sensor FS, and the rear caliper pressure is the pressure detected by the rear caliper pressure sensor RS.

As shown in Fig. 14(a), when the master cylinder pressure is increased from 0 in the control ON state, the front caliper pressure and the rear caliper pressure are increased as shown in Fig. 14(c). In the present example, the rear caliper pressure is larger than the front caliper pressure. In this case, as shown in Fig. 14(b), the both wheels braking force is also increased. When the master cylinder pressure becomes constant, the front caliper pressure and the rear caliper pressure become constant at different magnitudes, and the both wheels braking force also becomes constant.

At a time point t0, as shown in Fig. 14(a), when the brake control device 53 is switched from the control ON state to the control OFF state with the master cylinder pressure being constant, the front caliper pressure and the rear caliper pressure become equal to each other due to the operation of the tandem master cylinder MC as shown in Fig. 14(c). In the present embedment, two front calipers 510 are provided at the front wheel 3, and one rear caliper 520 is provided at the rear wheel 4, so that the braking force exerted on the front wheel 3 is twice the braking force exerted on the rear wheel 4. As shown in Fig. 14(b), the both wheels braking force in the control OFF state does not change from the both wheels braking force in the control ON state.

Therefore, even in the case where the brake control device 53 is switched from the control ON state to the control OFF state, an uncomfortable feeling is not supplied to the driver.

### (7) Comparative Example

Here, as the comparative example, the case where the operation amount-both wheels target braking force characteristics in the control ON state is different from the operation amount-both wheels target braking force characteristics in the control OFF state will be described.

Fig. 15 is a diagram showing an example of the operation amount-both wheels target braking force characteristics in the comparative example. In the comparative example, the operation amount-both wheels target braking force characteristics in the case where the brake control device 53 is in the control ON state and the operation amount-both wheels target braking force characteristics in the case where the brake control device 53 is in the control OFF state are different from each other. In the control ON state, pressurization by the pump PM is performed. Therefore, in the comparative example, the both wheels braking force in the control ON state is generally larger than the both wheels braking force in the control OFF state.

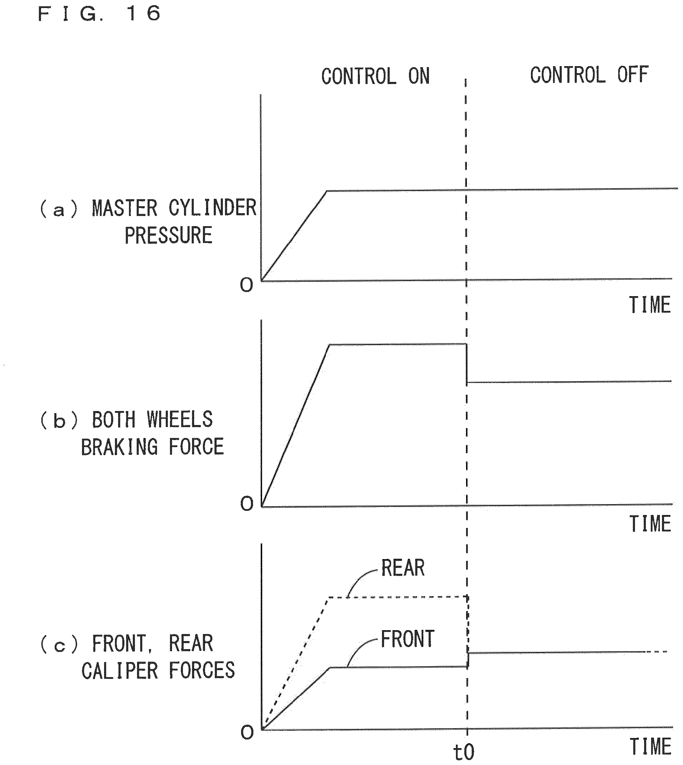

Fig. 16 is a diagram for explaining changes in braking force when the control ON state and the control OFF state are switched with each other in the comparative example.

Fig. 16(a) shows a change in master cylinder pressure, Fig. 16(b) shows a change in total of the braking forces exerted on the front wheel 3 and the rear wheel 4 (the both wheels braking force), and Fig. 16(c) shows a change in front caliper pressure and rear caliper pressure.

The front caliper pressure and the rear caliper pressure in the control ON state of the comparative example shown in Fig. 16(c) are respectively larger than the front caliper pressure and the rear caliper pressure in the control ON state of the embodiment shown in Fig. 14(c). In this case, at a time point t0, when the brake control device 53 switches from the control ON state to the control OFF state, the both wheels braking force in the control OFF state becomes smaller than the both wheels braking force in the control ON state as shown in Fig. 16(b). Thus, in the case where the brake control device 53 is switched from the control ON state to the control OFF state, an uncomfortable feeling is supplied to the driver.

### (8) Configuration and Operation of Control System

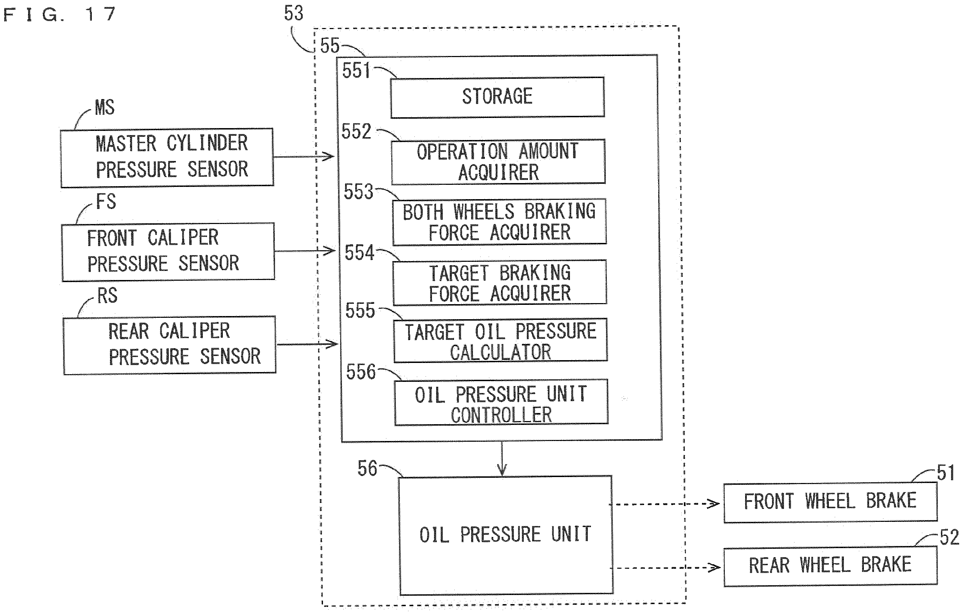

Fig. 17 is a block diagram mainly showing the configuration of the control system of the brake device 5 of Fig. 3.

The ECU 55 of the brake control device 53 includes a storage 551, an operation amount acquirer 552, a both wheels braking force acquirer 553, a target braking force acquirer 554, a target oil pressure calculator 555 and an oil pressure unit controller 556. The storage 551 stores a control program, the operation amount-front/rear wheel target braking force characteristics of Figs. 11 and 12, the operation amount-both wheels target braking force characteristics of Fig. 13, and various data. The ECU 55 has a CPU (a Central Processing Unit) and a ROM (a Read Only Memory) and a storage device such as a RAM (a Random Access Memory). In the storage device, the CPU that functions as the storage 551 executes the control program, so that the functions of the operation amount acquirer 552, the both wheels braking force acquirer 553, the target braking force acquirer 554, the target oil pressure calculator 555 and the oil pressure unit controller 556 are realized.

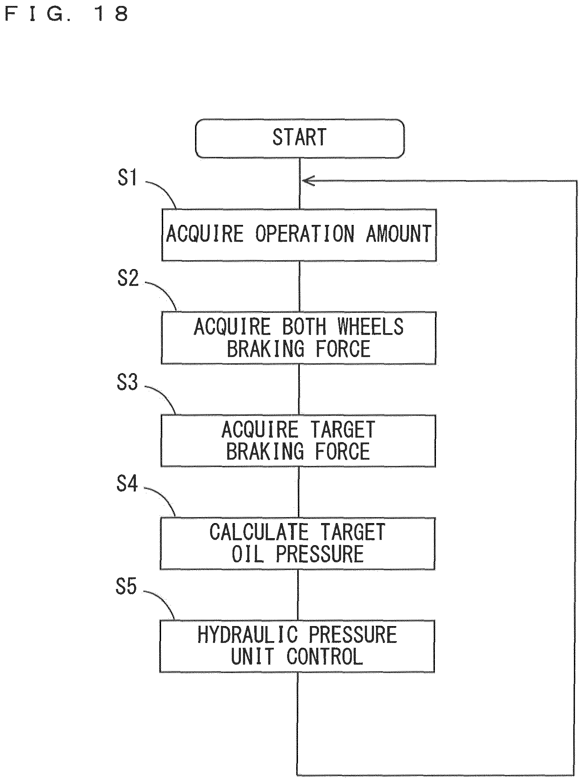

Fig. 18 is a flow chart showing an operation of the brake device 5 of Fig. 17 during the control ON.

First, the operation amount acquirer 552 acquires the operation amount of the brake lever 54 based on the master cylinder pressure detected by the master pressure sensor MS (step S1). In this case, the operation amount acquirer 552 converts a voltage output from the master pressure sensor MS into an oil pressure, and acquires the oil pressure as the operation amount.

Next, the both wheels braking force acquirer 553 acquires the both wheels target braking force corresponding to the operation amount from the operation amount-both wheels target braking force characteristics stored in the storage 551 (step S2).

Further, the target braking force acquirer 554 respectively acquires the front wheel target braking force and the rear wheel target braking force corresponding to the operation amount from the operation amount-front/rear wheel target braking force characteristics stored in the storage 551 (step S3). At this time, the front wheel target braking force and the rear wheel target braking force are corrected such that the total of the front wheel target braking force and the rear wheel target braking force corresponding to the operation amount is equal to the both wheels target braking force acquired in the step S2.

The operation amount-front/rear wheel target braking force characteristics may be set in advance such that the operation amount-both wheels target braking force characteristics in the control ON state is equal to the operation amount-both wheels target braking force characteristics in the control OFF state. In this case, the process of the step S2 does not have to be performed.

Next, the target oil pressure calculator 555 calculates the oil pressures corresponding to the acquired front wheel target braking force and rear wheel target braking force (step S4). Here, an oil pressure to be supplied to the pair of front calipers 510 (a target front caliper pressure) and an oil pressure to be supplied to the rear caliper 520 (a target rear caliper pressure) can be found by the following arithmetic formula.

The target front caliper pressure = the front wheel target braking force / (a front wheel cylinder area x a friction coefficient of a front wheel brake pad x the number of front wheel disc rotors x an effective radius of the front disc rotors / an effective radius of a front wheel tire)

The target rear caliper pressure = the rear wheel target braking force / (a rear wheel cylinder area x a friction coefficient of a rear wheel brake pad x the number of rear wheel disc rotors x an effective radius of the rear wheel disc rotors / an effective radius of a rear wheel tire)

Thereafter, the oil pressure unit controller 556 controls the oil pressure unit 56 such that the oil pressure corresponding to the front wheel target braking force (the target front caliper pressure) is supplied to the front wheel cylinder FWC, and the oil pressure corresponding to the rear wheel target braking force (the target rear caliper pressure) is supplied to the rear wheel cylinder RWC (step S5). In this case, the oil pressure unit controller 556 controls the opening and closing of the pressurization valves IV1, IV2 and the depressurization valves DV1, DV2 based on the pressures detected by the front caliper pressure sensor FS and the rear caliper pressure sensor RS of Fig. 3.

Thereafter, the process returns to the step S1, and the process of the step S1 to S5 is repeated until the brake control device 53 enters the control OFF state.

### (9) Effects of Embodiment

In the motorcycle 1 according to the present embodiment, during the control ON of the brake control device 53, the operation amount of the brake lever 54 by the driver is detected by the master pressure sensor MS. The front wheel target braking force and the rear wheel target braking force are acquired from the operation amount-front and rear wheel target braking force characteristics based on the operation amount detected by the master pressure sensor MS. The oil pressure corresponding to the front wheel target braking force is supplied to the front wheel brake 51, and the oil pressure corresponding to the rear wheel target braking force is supplied to the second brake. Thus, the braking forces appropriately corresponding to the operation amount can be respectively distributed to the front wheel 3 and the rear wheel 4 by operating the brake lever 54, which is a single operation member, by the driver.

During the power OFF or when a problem occurs, the brake control device 53 enters the control OFF state, and the hydraulic pressure control is not performed. During the control OFF of the brake control device 53, the oil pressures corresponding to the operation amount of the brake lever 54 by the driver are directly supplied from the tandem master cylinder MC to the front wheel brake 51 and the rear wheel brake 52. Thus, the driver can manually adjust the braking forces exerted on the front wheel 3 and the rear wheel 4 by operating the brake lever 54, which is a single operation member.

Here, the hydraulic pressure control by the brake control device 53 is performed such that the relationship between the operation amount of the brake lever 54 and the total of the braking forces exerted on the front wheel 3 and the rear wheel 4 during the control ON of the brake control device 53 is equal to the relationship between the operation amount of the brake lever 54 and the total of the braking forces exerted on the front wheel 3 and the rear wheel 4 during the control OFF of the brake control device 53. Thus, when the control ON state and the control OFF state of the brake control device 53 are switched with each other, a rapid change in braking force does not occur, so that stable deceleration is performed without an uncomfortable feeling being supplied to the driver. As a result, a load applied in the braking operation by the driver can be reduced, and comfort during the braking operation can be improved.

### (10) Other Embodiments

### (a) Other Examples of Braking Operation Member

While the brake lever 54 is provided in the vicinity of the left end of the handlebar 71 as a single operation member in the above-mentioned embodiment, the arrangement of a single operation member is not limited to this.

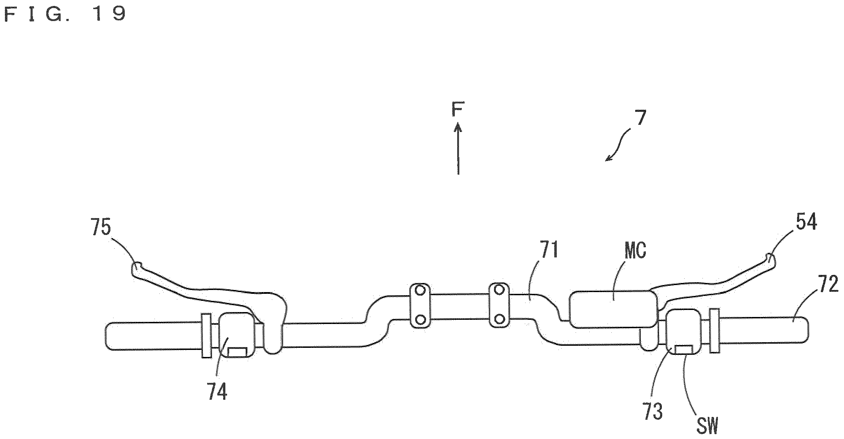

Fig. 19 is a plan view showing another example of the handle 7. In the example of Fig. 19, the accelerator grip 72 is provided at the right end of the handlebar 71. The tandem master cylinder MC is provided at the center of the right half portion of the handlebar 71. Further, the brake lever 54 is provided at the center of the right half portion of the handlebar 71 to extend to a position in the vicinity of the right end. The reserve tank RT (not shown) is attached to the upper surface of the tandem master cylinder MC. The switch box 73 is attached to a position between the accelerator grip 72 and the tandem master cylinder MC. The characteristics switching switch SW is provided at the switch box 73.

The switch box 74 is attached to the center of the left half portion of the handlebar 71. Further, the clutch lever 75 is provided at the center of the left half portion of the handlebar 71 to extend to a position in the vicinity of the left end. The characteristics switching switch SW may be provided at the switch box 74.

The handle 7 of Fig. 19 is provided at the motorcycle including a manual transmission. The driver adjusts the output of the engine 6 by operating the accelerator grip 72 with his or her right hand, and performs disconnection and connection of the clutch by operating the clutch lever 75 with his or her left hand. The driver operates the brake lever 54 with his or her right hand.

In the present example, the brake lever 54 that is a single operation member is provided on the opposite side of the clutch lever 75. Thus, the driver can simultaneously and independently perform the adjustment of the braking forces and the adjustment of disconnection and connection of the driving forces for the front wheel 3 and the rear wheel 4 with different hands during starting on the ramp. Therefore, good driving operability during the stop, and before and after the starting of the motorcycle 1 can be ensured.

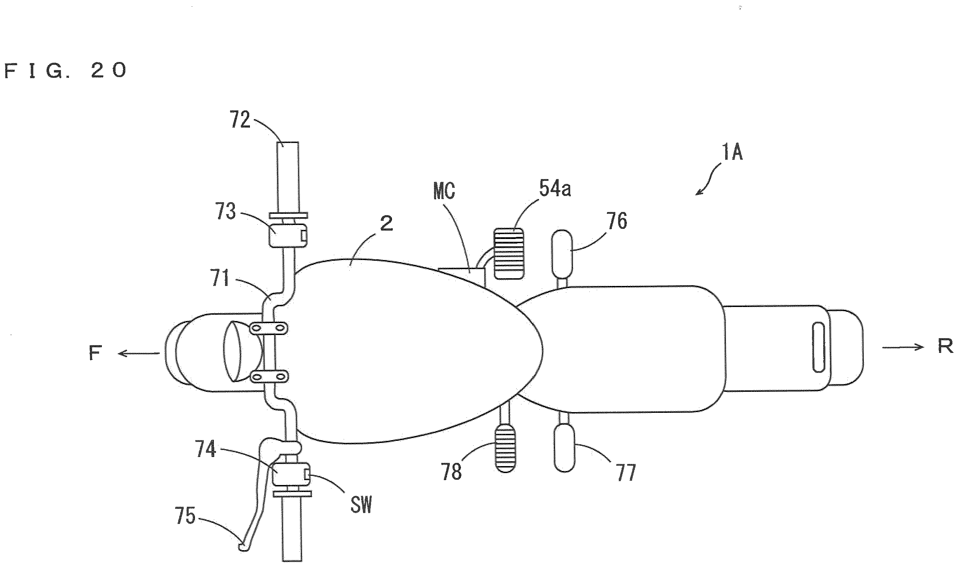

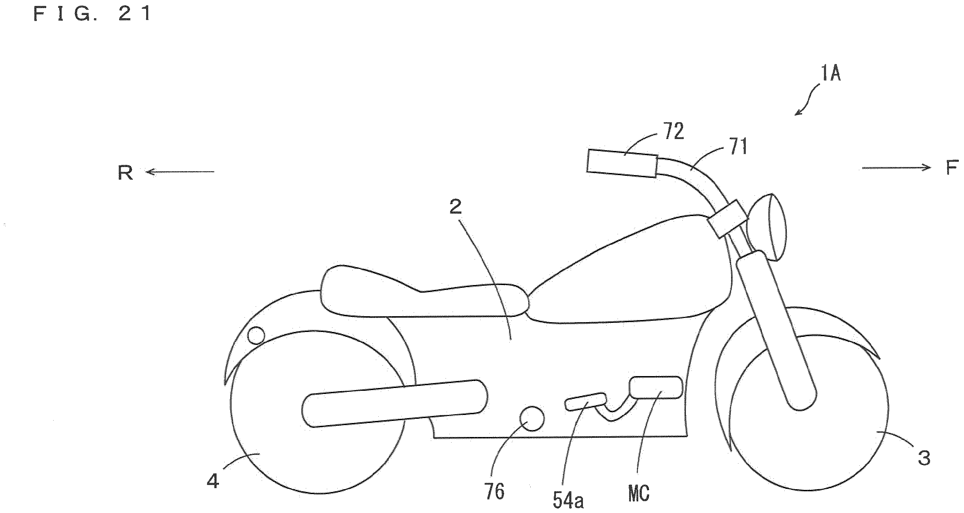

Fig. 20 is a schematic plan view showing an example of another motorcycle to which the present invention is applied. Fig. 21 is a schematic side view of the motorcycle of Fig. 20. The motorcycle 1A of Figs. 20 and 21 is an American (cruiser) type motorcycle.

In the motorcycle 1A of Figs. 20 and 21, the switch box 73 is attached to the center of the right half portion of the handlebar 71 of the handle 7, and the switch box 74 is attached to the center of the left half portion of the handlebar 71. Further, the clutch bar 75 is provided at the center of the left half portion of the handlebar 71 to extend to a position in the vicinity of the left end. At lower portions on both sides of the vehicle main body 2, footrests 76, 77 on which the driver puts his or her feet are provided. A brake pedal 54a is provided in front of the footrest 76 on the right side of the vehicle main body 2. The tandem master cylinder MC is attached to a position in the vicinity of the brake pedal 54a on the right side of the vehicle main body 2. A shift pedal 78 for transmission is provided in front of the footrest 77 on the left side of the vehicle main body 2. A top portion of a tread surface of the brake pedal 54a is located above a top portion of a tread surface of the footrest 76. Further, a top portion of a tread surface of the shift pedal 78 is located above a top portion of a tread surface of the footrest 77.

In the present embodiment, the driver adjusts the output of the engine 6 by operating the accelerator grip 72 with his or her right hand, and performs disconnection and connection of the clutch by operating the clutch lever 75 with his or her left hand. Further, the driver operates the brake pedal 54a with the right foot put on the right footrest 76, and operates the shift pedal 78 with the left foot put on the left footrest 77. Thus, a driving operation becomes easy. Further, even with an inertial force being added to the feet by braking of the front wheel 3 and the rear wheel 4, a tread force of the brake pedal 54a can be delicately and easily adjusted while the inertial force is received by the footrest 76.

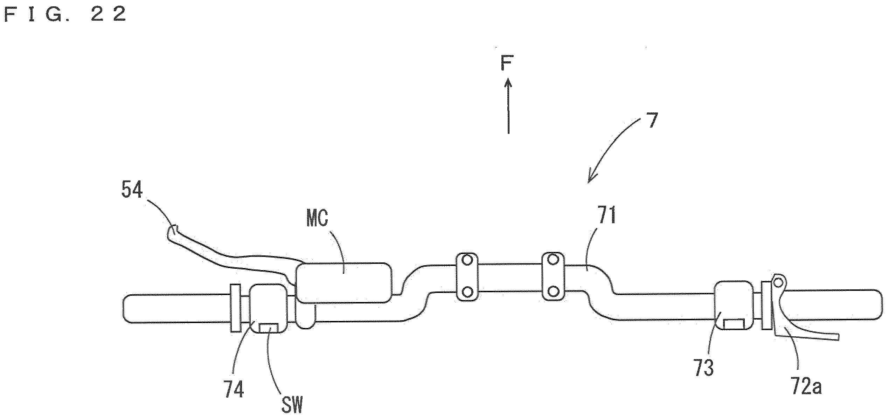

Fig. 22 is a plan view showing yet another example of the handle 7. In the example of Fig. 22, a thumb lever type accelerator lever 72a is provided in the vicinity of the right end of the handlebar 71. Other parts of the handle 7 of Fig. 22 are similar to the parts corresponding to the handle 7 of Fig. 2. The handle 7 of Fig. 22 is provided at a buggy type four-wheeled automobile (an ATV (an All Terrain Vehicle)), for example.

The driver adjusts the output of the engine 6 by pressing the accelerator lever 72 forward with his or her right thumb, and operates the brake lever 54 with his or her left hand.

In the present example, the brake lever 54, which is a single operation member, is provided on the opposite side of the thumb lever type accelerator lever 72a. Thus, the driver can simultaneously and independently perform the adjustment of the braking forces and the adjustment of the driving forces for the front wheel 3 and the rear wheel 4. Therefore, good driving operability during the acceleration and deceleration of the straddled vehicle can be ensured, and the behavior and speed of the straddled vehicle can be easily adjusted. Further, the one end of the handlebar 71 can be easily held by a thumb and a plurality of other fingers at all times, so that steerability, and maintenance of the upper body can be enhanced.

### (b) Another Configuration of Oil Pressure Unit 56

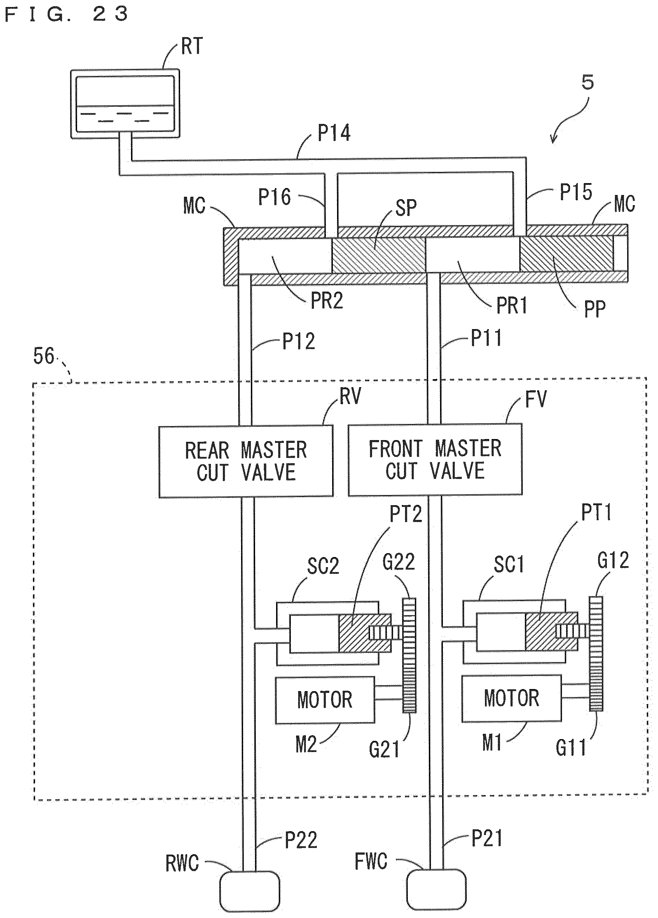

Fig. 23 is a schematic diagram mainly showing an example of another configuration of the oil pressure unit 56 of the brake device 5. The oil pressure unit 56 of Fig. 23 includes a front master cut valve FV, a rear master cut valve RV, sub-cylinders SC1, SC2, motors M1, M2 and gears G11, G12, G21, G22. In the sub-cylinders SC1, SC2, pistons PT1, PT2 are provided to be respectively movable in the axis direction. When the motor M1 operates, the gears G11, G12 are rotated. Thus, the piston PT1 is moved in the axis direction in the sub-cylinder SC1. When the motor M2 operates, the gears G21, G22 are rotated. Thus, the piston PT2 is moved in the axis direction in the sub-cylinder SC2.

During the control OFF of the brake control device 53, the front master cut valve FV and the rear master cut valve RV of the oil pressure unit 56 are opened, and the motors M1, M2 do not operate. In this case, the oil pressure in the first pressure chamber PR1 of the tandem master cylinder MC is directly supplied to the front wheel cylinder FWC via the oil pressure pipe P11, the front master cut valve FV and the oil pressure pipe P21. Further, the oil pressure in the second pressure chamber PR2 of the tandem master cylinder MC is directly supplied to the rear wheel cylinder RWC via the oil pressure pipe P12, the rear master cut valve RV and the oil pressure pipe P22. Thus, the braking forces corresponding to the operation amount of the brake lever 54 are respectively exerted on the front wheel 3 and the rear wheel 4.

Also during the control ON of the brake control device 53, the front master cut valve FV and the rear master cut valve RV are opened. When the motor M1 is rotated in one direction, the piston PT1 is moved in one direction (the leftward direction of the diagram) in the sub-cylinder SC1. Thus, the oil pressure supplied to the front wheel cylinder FWC is increased. When the motor M1 is rotated in an opposite direction, the piston PT1 is moved in another direction (the rightward direction of the diagram) in the sub-cylinder SC1. Thus, the oil pressure supplied to the front wheel cylinder FWC is decreased. Similarly, when the motor M2 is rotated in one direction or the opposite direction, the piston PT2 is moved in one or the other direction in the sub-cylinder SC2. Thus, the oil pressure supplied to the rear wheel cylinder RWC is increased or decreased. In this manner, the braking forces exerted on the front wheel 3 and the rear wheel 4 are respectively adjusted by the operations of the motors M1, M2.

The configuration of the oil pressure unit 56 is not limited to the configurations of the Figs. 5 and 23. For example, a first three-way valve may be connected to a position between the oil pressure pipe P11 and the oil pressure pipe P21, a second three-way valve may be connected to a position between the oil pressure pipe P12 and the oil pressure pipe P22, and an oil pressure adjustment unit that adjusts the oil pressure may be connected to the first and second three-way valves.

### (c) Another Example of Operation Amount Detector

While the master pressure sensor MS is used as an operation amount detector for detecting an operation amount of a single operation member by the driver in the above-mentioned embodiment, the operation amount detector is not limited to this. Various types of sensors, such as a stroke sensor that can detect a movement amount of an operation member, can be used as the operation amount detector.

### (d) Another Example of Straddled Vehicle

The straddled vehicle according to the present invention is not limited to a vehicle that travels while a rider is straddling a seat, but includes a vehicle in which the rider can be seated with both of her or his feet put together. That is, the straddled vehicle according to the present invention includes various types of vehicles that can turn while the vehicle bodies are tilted.

While the motorcycle 1 is described as one example of the straddled vehicle in the above-mentioned embodiment, the present invention is not limited to this. The present invention can be applied to another straddled vehicle such as an electric bicycle, a motor tricycle, a buggy type four-wheeled automobile or a snow mobile.

### (11) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the brake device 5 is an example of a brake device, the front wheel brake 51 and the rear wheel brake 52 are respectively examples of first and second brakes, and the brake lever 54 or the brake pedal 54a are examples of a single operation member. The master pressure sensor MS is an example of an operation amount detector, the storage 551 is an example of a storage, the brake control device 53 is an example of a hydraulic pressure control device, and the tandem master cylinder MC is an example of a hydraulic pressure generation device.

The oil pressure is an example of a hydraulic pressure, the front wheel target braking force and the rear wheel target braking force are respectively examples of first and second target braking forces, the operation amount-front/rear wheel target braking force characteristics is an example of a relationship between an operation amount of an operation member and braking forces respectively exerted on a front wheel and a rear wheel, during control OFF is an example of during a non-operation of hydraulic pressure control, and the control ON is an example of during an operation of hydraulic pressure control.

The front wheel cylinder FWC and the rear wheel cylinder RWC are respectively examples of first and second cylinders, the tandem master cylinder MC is an example of a master cylinder, the first pressure chamber PR1 and the second pressure chamber PR2 are examples of first and second pressure chambers, and the characteristics switching switch SW is an example of a selector.

The handle 7 is an example of a handle, the handlebar 71 is an example of a handlebar, the accelerator grip 72 is an example of an accelerator grip, the clutch lever 75 is an example of a clutch lever, the footrests 76, 77 are examples of first and second footrests, the shift pedal 78 is an example of a shift pedal, and the accelerator lever 72a is an example of a thumb lever type accelerator lever. The vehicle main body 2 is an example of a main body, and the engine 6 or the electric motor is an example of a motor.

Various other elements having configurations or functions described in the claims can be also used as each of constituent elements recited in the claims.

### [Industrial Applicability]

The present invention can be utilized for the braking of various types of straddled vehicles.

## Claims

1. A brake device (5) for a straddled vehicle (1) having a front wheel (3) and a rear wheel (4), the brake device comprising:
a first brake (51) configured to exert a braking force on the front wheel (3) by a hydraulic pressure;
a second brake (52) configured to exert a braking force on the rear wheel (4) by a hydraulic pressure; an operation member (54, 54a) configured to be operated by a driver in order to adjust the braking forces of the first and second brakes (51, 52);
an operation amount detector (MS) configured to detect an operation amount of the operation member (54, 54a);
a storage (551) configured to store a relationship between an operation amount of the operation member (54, 54a) and braking forces to be respectively exerted on the front wheel (3) and the rear wheel (4);
a hydraulic pressure control device (53) configured to perform hydraulic pressure control to acquire, from the relationship stored in the storage (551) based on the operation amount detected by the operation amount detector (MS), a braking force to be exerted on the front wheel (3) as a first target braking force and a braking force to be exerted on the rear wheel (4) as a second target braking force, to supply a hydraulic pressure corresponding to the acquired first target braking force to the first brake (51), and to supply a hydraulic pressure corresponding to the acquired second target braking force to the second brake (52);
**characterised in that** the operation member comprises a single operation member (54, 54a), and a hydraulic pressure generation device (MC) is configured to respectively supply hydraulic pressures corresponding to the operation amount of the single operation member (54, 54a) to the first brake (51) and the second brake (52) during a non-operation of the hydraulic pressure control of the hydraulic pressure control device (53),
wherein the hydraulic pressure control device (53) is configured to perform the hydraulic pressure control such that a relationship between an operation amount of the single operation member (54, 54a) and a total of the braking forces exerted on the front wheel (3) and on the rear wheel (4) during an operation of the hydraulic pressure control is equal to a relationship between an operation amount of the single operation member (54, 54a) and a total of the braking forces exerted on the front wheel (3) and on the rear wheel (4) during the non-operation of the hydraulic pressure control.

2. The brake device (5) according to claim 1, wherein
the first brake (51) includes a first cylinder (FWC) configured to exert a braking force on the front wheel (3) by a hydraulic pressure,
the second brake (52) includes a second cylinder (RWC) configured to exert a braking force on the rear wheel (4) by a hydraulic pressure,
the hydraulic pressure generation device (MC) includes a tandem master cylinder having first and second pressure chambers (PR1, PR2) configured to respectively generate the hydraulic pressures corresponding to the operation amount of the single operation member (54, 54a), and
the hydraulic pressure generated by the first pressure chamber (PR1) is supplied to the first cylinder (FWC), and the hydraulic pressure generated by the second pressure chamber (PR2) is supplied to the second cylinder (RWC).

3. The brake device (5) according to claim 1 or 2, wherein
the storage (551) is configured to store a plurality of relationships,
the brake device (5) further comprises a selector (SW) configured to select one relationship from the plurality of relationships, and
the hydraulic pressure control device (53) is configured to respectively acquire the first and second target braking forces from the relationship selected by the selector (SW) based on the operation amount detected by the operation amount detector (MS).

4. A straddled vehicle comprising a brake device (5) according to any one of claims 1 to 3, wherein
the straddled vehicle (1) comprises a motor (6), a handlebar (71), and an accelerator grip (72) that is provided at one end of the handlebar (71) and is configured to adjust an output of the motor (6), wherein the straddled vehicle (1) is configured to transmit an output of the motor (6) to at least one of the front wheel (3) and the rear wheel (4) via an automatic transmission or directly, and
the single operation member (54) includes a brake lever provided at a portion of the handlebar (71) on an opposite side of the accelerator grip (72).

5. A straddled vehicle comprising a brake device (5) according to any one of claims 1 to 3, wherein
the straddled vehicle (1) comprises a motor (6), a handlebar (71), an accelerator grip (72) that is provided at one end of the handlebar (71) and is configured to adjust an output of the motor (6), and a clutch lever (75) provided at a portion of the handlebar (71) on an opposite side of the accelerator grip (72), and
the single operation member (54) includes a brake lever provided on a same side as the accelerator grip (72) of the handlebar (71).

6. A straddled vehicle comprising a brake device (5) according to any one of claims 1 to 3, wherein
the straddled vehicle (1) comprises a motor (6), a handlebar (71), an accelerator grip (72) that is provided at one end of the handlebar (71) and is configured to adjust an output of the motor (6), first and second footrests (76, 77) on which feet of the driver are able to be put, and a shift pedal provided to be operable by one of the feet which is put on the first footrest (76), and
the single operation member (54a) includes a brake pedal provided to be operable by another of the feet which is put on the second footrest (77).

7. A straddled vehicle comprising a brake device (5) according to any one of claims 1 to 3, wherein
the straddled vehicle (1) comprises a motor (6), a handlebar (71), and a thumb lever type accelerator lever (72a) that is provided at one end of the handlebar (71) and is configured to adjust an output of the motor (6), and
the single operation member (54) includes a brake lever provided at a portion of the handlebar (71) on an opposite side of the thumb lever type accelerator lever (72a).

8. A straddled vehicle (1) comprising:
a body (2); a front wheel (3) provided at the body (2) to be rotatable; a rear wheel (4) provided at the body (2) to be rotatable;
a motor (6) configured to generate an output for rotating at least one of the front wheel (3) and the rear wheel (4); and
a brake device (5) according to any one of claims 1 to 7 for braking the front wheel (3) and the rear wheel (4).

## Patentansprüche

1. Eine Bremsvorrichtung (5) für ein rittlings zu fahrendes Fahrzeug (1) mit einem Vorderrad (3) und einem Hinterrad (4), wobei die Bremsvorrichtung folgende Merkmale aufweist:
eine erste Bremse (51), die dazu konfiguriert ist, durch einen Hydraulikdruck eine Bremskraft auf das Vorderrad (3) auszuüben;
eine zweite Bremse (52), die dazu konfiguriert ist, durch einen Hydraulikdruck eine Bremskraft auf das Hinterrad (4) auszuüben;
ein Betätigungsbauglied (54, 54a), das dazu konfiguriert ist, durch einen Fahrer betätigt zu werden, um die Bremskräfte der ersten und der zweiten Bremse (51, 52) einzustellen;
einen Betätigungsbetragdetektor (MS), der dazu konfiguriert ist, einen Betätigungsbetrag des Betätigungsbauglieds (54, 54a) zu erfassen;
einen Speicher (551), der dazu konfiguriert ist, eine Beziehung zwischen einem Betätigungsbetrag des Betätigungsbauglieds (54, 54a) und Bremskräften zu speichern, die jeweils auf das Vorderrad (3) und das Hinterrad (4) ausgeübt werden sollen;
eine Hydraulikdruck-Steuervorrichtung (53), die dazu konfiguriert ist, eine Hydraulikdrucksteuerung durchzuführen, um von der Beziehung, die in dem Speicher (551) gespeichert ist, auf Basis des Betätigungsbetrags, der durch den Betätigungsbetragdetektor (MS) erfasst wird, eine Bremskraft, die auf das Vorderrad (3) ausgeübt werden soll, als eine erste Zielbremskraft und eine Bremskraft, die auf das Hinterrad (4) ausgeübt werden soll, als eine zweite Zielbremskraft zu erhalten, um einen Hydraulikdruck, der der erhaltenen ersten Zielbremskraft entspricht, der ersten Bremse (51) zuzuführen und um einen Hydraulikdruck, der der erhaltenen zweiten Zielbremskraft entspricht, der zweiten Bremse (52) zuzuführen;
**dadurch gekennzeichnet, dass** das Betätigungsbauglied ein einzelnes Betätigungsbauglied (54, 54a) aufweist, und
eine Hydraulikdruck-Erzeugungsvorrichtung (MC), die dazu konfiguriert ist, Hydraulikdrücke, die dem Betätigungsbetrag des einzelnen Betätigungsbauglieds (54, 54a) entsprechen, während einer Nichtbetätigung der Hydraulikdrucksteuerung der Hydraulikdruck-Steuervorrichtung (53) jeweils der ersten Bremse (51) und der zweiten Bremse (52) zuzuführen,
wobei die Hydraulikdruck-Steuervorrichtung (53) dazu konfiguriert ist, die Hydraulikdrucksteuerung derart durchzuführen, dass eine Beziehung zwischen einem Betätigungsbetrag des einzelnen Betätigungsbauglieds (54, 54a) und einem Gesamtbetrag der Bremskräfte, die während einer Betätigung der Hydraulikdrucksteuerung auf das Vorderrad (3) und auf das Hinterrad (4) ausgeübt werden, gleich einer Beziehung zwischen einem Betätigungsbetrag des einzelnen Betätigungsbauglieds (54, 54a) und einem Gesamtbetrag der Bremskräfte ist, die während der Nichtbetätigung der Hydraulikdrucksteuerung auf das Vorderrad (3) und auf das Hinterrad (4) ausgeübt werden.

2. Die Bremsvorrichtung (5) gemäß Anspruch 1, bei der
die erste Bremse (51) einen ersten Zylinder (FWC) umfasst, der dazu konfiguriert ist, durch einen Hydraulikdruck eine Bremskraft auf das Vorderrad (3) auszuüben,
die zweite Bremse (52) einen zweiten Zylinder (RWC) umfasst, der dazu konfiguriert ist, durch einen Hydraulikdruck eine Bremskraft auf das Hinterrad (4) auszuüben,
die Hydraulikdruck-Erzeugungsvorrichtung (MC) einen Tandemmasterzylinder mit einer ersten und einer zweiten Druckkammer (PR1, PR2) umfasst, die dazu konfiguriert sind, jeweils die Hydraulikdrücke zu erzeugen, die dem Betätigungsbetrag des einzelnen Betätigungsbauglieds (54, 54a) entsprechen, und
der Hydraulikdruck, der durch die erste Druckkammer (PR1) erzeugt wird, dem ersten Zylinder (FWC) zugeführt wird, und der Hydraulikdruck, der durch die zweite Druckkammer (PR2) erzeugt wird, dem zweiten Zylinder (RWC) zugeführt wird.

3. Die Bremsvorrichtung (5) gemäß Anspruch 1 oder 2, bei der
der Speicher (551) dazu konfiguriert ist, eine Mehrzahl von Beziehungen zu speichern,
die Bremsvorrichtung (5) ferner einen Selektor (SW) aufweist, der dazu konfiguriert ist, eine Beziehung aus der Mehrzahl von Beziehungen auszuwählen, und
die Hydraulikdruck-Steuervorrichtung (53) dazu konfiguriert ist, die erste beziehungsweise die zweite Zielbremskraft von der Beziehung zu erhalten, die durch den Selektor (SW) auf Basis des durch den Betätigungsbetragdetektor (MS) erfassten Betätigungsbetrags ausgewählt wird.

4. Ein rittlings zu fahrendes Fahrzeug, das eine Bremsvorrichtung (5) gemäß einem der Ansprüche 1 bis 3 aufweist, wobei
das rittlings zu fahrende Fahrzeug (1) einen Motor (6), einen Lenker (71) und einen Beschleunigungsgriff (72) aufweist, der an einem Ende des Lenkers (71) vorgesehen ist und dazu konfiguriert ist, eine Ausgabe des Motors (6) einzustellen, wobei das rittlings zu fahrende Fahrzeug (1) dazu konfiguriert ist, eine Ausgabe des Motors (6) an das Vorderrad (3) und/oder das Hinterrad (4) über ein automatisches Getriebe oder direkt zu übertragen, und
das einzelne Betätigungsbauglied (54) einen Bremshebel umfasst, der an einem Abschnitt des Lenkers (71) auf einer gegenüberliegenden Seite des Beschleunigungsgriffs (72) vorgesehen ist.

5. Ein rittlings zu fahrendes Fahrzeug, das eine Bremsvorrichtung (5) gemäß einem der Ansprüche 1 bis 3 aufweist, wobei
das rittlings zu fahrende Fahrzeug (1) einen Motor (6), einen Lenker (71), einen Beschleunigungsgriff (72), der an einem Ende des Lenkers (71) vorgesehen ist und dazu konfiguriert ist, eine Ausgabe des Motors (6) einzustellen, und einen Kupplungshebel (75) aufweist, der an einem Abschnitt des Lenkers (71) auf einer gegenüberliegenden Seite des Beschleunigungsgriffs (72) vorgesehen ist, und
das einzelne Betätigungsbauglied (54) einen Bremshebel umfasst, der auf einer selben Seite wie der Beschleunigungsgriff (72) des Lenkers (71) vorgesehen ist.

6. Ein rittlings zu fahrendes Fahrzeug, das eine Bremsvorrichtung (5) gemäß einem der Ansprüche 1 bis 3 aufweist, wobei
das rittlings zu fahrende Fahrzeug (1) einen Motor (6), einen Lenker (71), einen Beschleunigungsgriff (72), der an einem Ende des Lenkers (71) vorgesehen und dazu konfiguriert ist, eine Ausgabe des Motors (6) einzustellen, eine erste und eine zweite Fußraste (76, 77), auf denen die Füße des Fahrers abgestellt werden können, und ein Schaltpedal aufweist, das dahingehend vorgesehen ist, durch einen auf der ersten Fußraste (76) abgestellten Fuß betätigt zu werden, und
das einzelne Betätigungsbauglied (54a) ein Bremspedal umfasst, das dahingehend vorgesehen ist, durch einen anderen auf der zweiten Fußraste (77) abgestellten Fuß betätigt zu werden.

7. Ein rittlings zu fahrendes Fahrzeug, das eine Bremsvorrichtung (5) gemäß einem der Ansprüche 1 bis 3 aufweist, wobei
das rittlings zu fahrende Fahrzeug (1) einen Motor (6), einen Lenker (71) und einen Daumenhebeltyp-Beschleunigungshebel (72a) aufweist, der an einem Ende des Lenkers (71) vorgesehen und dazu konfiguriert ist, eine Ausgabe des Motors (6) einzustellen, und
das einzelne Betätigungsbauglied (54) einen Bremshebel umfasst, der an einem Abschnitt des Lenkers (71) auf einer gegenüberliegenden Seite des Daumenhebeltyp-Beschleunigungshebels (72a) vorgesehen ist.

8. Ein rittlings zu fahrendes Fahrzeug (1), das folgende Merkmale aufweist:
einen Körper (2);
ein Vorderrad (3), das an dem Körper (2) dahingehend vorgesehen ist, drehbar zu sein;
ein Hinterrad (4), das an dem Körper (2) dahingehend vorgesehen ist, drehbar zu sein;
einen Motor (6), der dazu konfiguriert ist, eine Ausgabe zum Drehen des Vorderrads (3) und/oder des Hinterrads (4) zu erzeugen; und
eine Bremsvorrichtung (5) gemäß einem der Ansprüche 1 bis 7 zum Bremsen des Vorderrads (3) und des Hinterrads (4).

## Revendications

1. Dispositif de frein (5) pour véhicule de type à califourchon (1) présentant une roue avant (3) et une roue arrière (4), le dispositif de frein comprenant:
un premier frein (51) configuré pour exercer une force de freinage sur la roue avant (3) par une pression hydraulique;
un deuxième frein (52) configuré pour exercer une force de freinage sur la roue arrière (4) par une pression hydraulique;
un élément d'actionnement (54, 54a) configuré pour être actionné par un conducteur pour ajuster les forces de freinage des premier et deuxième freins (51, 52);
un détecteur de quantité d'actionnement (MS) configuré pour détecter une quantité d'actionnement de l'élément d'actionnement (54, 54a);
une mémoire (551) configurée pour mémoriser un rapport entre une quantité d'actionnement de l'élément d'actionnement (54, 54a) et les forces de freinage à exercer respectivement sur la roue avant (3) et la roue arrière (4);
un dispositif de régulation de pression hydraulique (53) configuré pour effectuer une régulation de pression hydraulique pour acquérir, à partir du rapport mémorisé dans la mémoire (551) sur base de la quantité d'actionnement détectée par le détecteur de quantité d'actionnement (MS), une force de freinage à exercer sur la roue avant (3) comme première force de freinage cible et une force de freinage à exercer sur la roue arrière (4) comme deuxième force de freinage cible, pour alimenter une pression hydraulique correspondant à la première force de freinage cible acquise vers le premier frein (51), et pour alimenter une pression hydraulique correspondant à la deuxième force de freinage cible acquise vers le deuxième frein (52);
**caractérisé par le fait que** l'élément d'actionnement comprend un élément d'actionnement unique (54, 54a), et
un dispositif de génération de pression hydraulique (MC) est configuré pour alimenter les pressions hydrauliques correspondant à la quantité d'actionnement de l'élément d'actionnement unique (54, 54a) respectivement vers le premier frein (51) et vers le deuxième frein (52) pendant un non-actionnement de la régulation de pression hydraulique du dispositif de régulation de pression hydraulique (53),
dans lequel le dispositif de régulation de pression hydraulique (53) est configuré pour effectuer la régulation de pression hydraulique de sorte qu'un rapport entre une quantité d'actionnement de l'élément d'actionnement unique (54, 54a) et un total des forces de freinage exercées sur la roue avant (3) et sur la roue arrière (4) pendant un actionnement de la régulation de pression hydraulique soit égal à un rapport entre une quantité d'actionnement de l'élément d'actionnement unique (54, 54a) et un total des forces de freinage exercées sur la roue avant (3) et sur la roue arrière (4) pendant le non-actionnement de la régulation de pression hydraulique.

2. Dispositif de frein (5) selon la revendication 1, dans lequel
le premier frein (51) comporte un premier cylindre (FWC) configuré pour exercer une force de freinage sur la roue avant (3) par une pression hydraulique,
le deuxième frein (52) comporte un deuxième cylindre (RWC) configuré pour exercer une force de freinage sur la roue arrière (4) par une pression hydraulique,
le dispositif de génération de pression hydraulique (MC) comporte un maître-cylindre en tandem présentant des première et deuxième chambres de pression (PR1, PR2) configurées pour générer respectivement les pressions hydrauliques correspondant à la quantité d'actionnement de l'élément d'actionnement unique (54, 54a), et
la pression hydraulique générée par la première chambre de pression (PR1) est alimentée vers le premier cylindre (FWC), et la pression hydraulique générée par la deuxième chambre de pression (PR2) est alimentée vers le deuxième cylindre (RWC).

3. Dispositif de frein (5) selon la revendication 1 ou 2, dans lequel la mémoire (551) est configurée pour mémoriser une pluralité de rapports,
le dispositif de frein (5) comprend par ailleurs un sélecteur (SW) configuré pour sélectionner un rapport parmi la pluralité de rapports, et
le dispositif de régulation de pression hydraulique (53) est configuré pour acquérir respectivement les première et deuxième forces de freinage cibles à partir du rapport sélectionné par le sélecteur (SW) sur base de la quantité d'actionnement détectée par le détecteur de quantité d'actionnement (MS).

4. Véhicule de type à califourchon comprenant un dispositif de frein (5) selon l'une quelconque des revendications 1 à 3, dans lequel
le véhicule de type à califourchon (1) comprend un moteur (6), un guidon (71) et une poignée d'accélérateur (72) qui est prévue à une extrémité du guidon (71) et est configurée pour ajuster une sortie du moteur (6), où le véhicule de type à califourchon (1) est configuré pour transmettre une sortie du moteur (6) à au moins l'une parmi la roue avant (3) et la roue arrière (4) par l'intermédiaire d'une transmission automatique ou directement, et
l'élément d'actionnement unique (54) comporte un levier de frein prévu sur une partie du guidon (71) d'un côté opposé de la poignée d'accélérateur (72).

5. Véhicule de type à califourchon comprenant un dispositif de frein (5) selon l'une quelconque des revendications 1 à 3, dans lequel
le véhicule de type à califourchon (1) comprend un moteur (6), un guidon (71), une poignée d'accélérateur (72) qui est prévue à une extrémité du guidon (71) et qui est configurée pour ajuster une sortie du moteur (6), et un levier d'embrayage (75) prévu sur une partie du guidon (71) d'un côté opposé de la poignée d'accélérateur (72), et
l'élément d'actionnement unique (54) comporte un levier de frein prévu du même côté que la poignée d'accélérateur (72) du guidon (71).

6. Véhicule de type à califourchon comprenant un dispositif de frein (5) selon l'une quelconque des revendications 1 à 3, dans lequel
le véhicule à califourchon (1) comprend un moteur (6), un guidon (71), une poignée d'accélérateur (72) qui est prévue à une extrémité du guidon (71) et qui est configurée pour ajuster une sortie du moteur (6), des premier et deuxième repose-pieds (76, 77) sur lesquels les pieds du conducteur sont à même d'être placés, et une pédale de changement de vitesse prévue pour pouvoir être actionnée par l'un des pieds qui est placé sur le premier repose-pied (76), et
l'élément d'actionnement unique (54a) comporte une pédale de frein prévue pour pouvoir être actionnée par un autre des pieds qui est placé sur le deuxième repose-pied (77).

7. Véhicule de type à califourchon comprenant un dispositif de frein (5) selon l'une quelconque des revendications 1 à 3, dans lequel
le véhicule de type à califourchon (1) comprend un moteur (6), un guidon (71) et un levier d'accélérateur du type levier actionné par le pouce (72a) qui est prévu à une extrémité du guidon (71) et qui est configuré pour ajuster une sortie du moteur (6), et
l'élément d'actionnement unique (54) comporte un levier de frein prévu sur une partie du guidon (71) d'un côté opposé du levier d'accélérateur du type levier actionné par le pouce (72a).

8. Véhicule de type à califourchon (1) comprenant:
un corps (2);
une roue avant (3) prévue sur le corps (2) de manière à pouvoir tourner;
une roue arrière (4) prévue sur le corps (2) de manière à pouvoir tourner;
un moteur (6) configuré pour générer une sortie pour faire tourner au moins l'une parmi la roue avant (3) et la roue arrière (4); et
un dispositif de frein (5) selon l'une quelconque des revendications 1 à 7 pour freiner la roue avant (3) et la roue arrière (4).
